# EUROPÄISCHE PATENTSCHRIFT

(11) **EP 3 725 519 B1**
(45) Veröffentlichungstag und Bekanntmachung des Hinweises auf die Patenterteilung: **27.05.2026**
(21) Anmeldenummer: 20163987.9
(22) Anmeldetag: 18.03.2020
(51) Int. Cl.: B32B 37/24, B32B 33/00, B32B 37/10, B23B 7/06, B32B 21/02, B32B 21/06, B32B 27/10, B32B 29/00, B32B 7/06, B32B 38/00

(54) **VERFAHREN ZUR HERSTELLUNG EINER TIEFMATTEN WERKSTÜCKOBERFLÄCHE**
METHOD FOR MANUFACTURING A DEEP MAT WORKPIECE SURFACE
PROCÉDÉ DE FABRICATION D'UNE SURFACE DE PIÈCE TRÉS MATE

(30) Priorität: 19.03.2019 DE 102019203755
(43) Veröffentlichungstag der Anmeldung: 21.10.2020
(73) Patentinhaber: Hymmen GmbH Maschinen- und Anlagenbau, 33613 Bielefeld (DE)
(72) Erfinder: PANKOKE, René, 33739 Bielefeld (DE); VENNE, Jan-Philipp, 33335 Gütersloh (DE)
(74) Vertreter: Prüfer & Partner mbB Patentanwälte · Rechtsanwälte

(56) Entgegenhaltungen:
- EP-A1- 2 743 094
- EP-A1- 2 857 221
- EP-A1- 3 326 834
- EP-A2- 0 474 470
- EP-A2- 0 850 698
- EP-B1- 1 869 269
- EP-B1- 2 743 094
- EP-B1- 2 857 221
- DE-A1- 102019 203 755
- US-A1- 2005 186 393
- US-A1- 2006 234 009
- US-A1- 2009 197 036
- US-A1- 2015 314 639
- US-A1- 2018 370 209
- US-A1- 2019 077 138
- US-A1- 2019 091 983
- US-B2- 8 410 229

## Beschreibung

Die vorliegende Erfindung bezieht sich ganz allgemein auf flache, im Wesentlichen plattenförmigen Werkstücke mit dekorativen Oberflächen, welche in der weiteren Verarbeitung z.B. als Möbeloberflächen, Fußbodenpaneele und Wand- oder Deckenpaneele verwendet werden können.

In der industriellen Herstellung von flächigen Werkstücken, insbesondere für den Möbelbereich, wird heute üblicherweise eine Spanplatte als Kernlage verwendet, auf die dann eine Oberfläche mit gewünschten Oberflächeneigenschaften (dekorativ, farblich wie auch in Bezug auf Haptik, Chemikalienwiderstandsfähigkeit und ähnliche Oberflächeneigenschaften) aufgebracht wird. Zur Herstellung dieser Oberfläche gibt es verschiedene Verfahren, wobei die einfachste Methode die Verklebung einer zuvor hergestellten Finishfolie ist (sogenanntes Kaschierverfahren). Dabei wird ein mit Titandioxid und Acrylharz gefülltes Papier üblicherweise im rotativen Tiefdruckverfahren mit einem Dekor, z.B. einer Holzoberfläche, einem Stein- oder Phantasiedekor bedruckt und anschließend mit einer Lackschicht versehen. Die so hergestellte Folie ("Finishfolie") liegt üblicherweise bei einer Grammatur von 50 - 200 g/m². Nach der Verklebung mit der Holzwerkstoffplatte ergibt sich eine für den Möbelbau geeignete Oberfläche. Nachteilig an diesem Verfahren ist, dass die Kratz- und Verschleißfestigkeit der Oberfläche eingeschränkt ist.

Eine andere bekannte Möglichkeit stellt die Lackierung von flächigen Werkstücken mit UV-härtenden Acrylatlacksystemen oder wasserbasierenden, physikalisch trocknenden Lackoberflächen dar. Hierzu ist eine Vielzahl von Verfahren bekannt, bei denen zum Teil die lackierte Oberfläche direkt digital bedruckt wird. Die resultierende Oberflächeneigenschaften wie Glanzgrad, Haptik und Widerstandsfähigkeit werden typischerweise durch Aufbringen einer transparenten Decklackschicht, die nach dem digitalen Bedrucken aufgetragen wird, erreicht.

Eine weitere bekannte Möglichkeit ist die Beschichtung mit Melaminformaldehydharz oder anderen duroplastischen Harzsystemen. Derartige Beschichtungen finden insbesondere bei hochbeanspruchten Werkstücken, wie z.B. Küchenarbeitsplatten oder besonders beanspruchten Möbelfronten, aber auch bei der Herstellung von Laminatfußböden Verwendung. Bei der Beschichtung mit Melaminformaldehydharz wird ein konventionelles, digitalbedrucktes oder auch unifarbenes Dekorpapier mit einem Melaminformaldehydharz imprägniert, getrocknet und vorkondensiert. Das so behandelte Dekorpapier (Film) wird vorzugsweise mit einer Span- oder MDF-Platte im Kurztaktpressenverfahren bei üblicherweise 30 bis 50 bar Flächendruck und einer Reaktionstemperatur von 160 °C bis 210 °C unter Verwendung eines Pressbleches verpresst. Das Pressblech kann eine prägende Struktur (z. B. Holzporennachstellung, Alutex oder Pearl-Oberflächen) aufweisen sowie einen definierten Glanzgrad in der Beschichtung verursachen. Die Oberflächeneigenschaften werden demnach durch das Presswerkzeug auf die Melaminharzoberfläche übertragen. Die so erzeugten Oberflächen sind hygienisch, kratz- und verschleißfest sowie thermisch besonders widerstandsfähig. In diesen Eigenschaften sind sie den UV-härtenden Acryllacksystemen in der Regel überlegen. Die einfache Herstellung und Verarbeitung von Melaminformaldehydharzen sowie die Beschichtung von imprägnierten Dekorfilmen auf Holzwerkstoffplatten haben dazu geführt, dass sich dieses Verfahren weltweit durchgesetzt hat.

Nachteilig ist allerdings, dass melaminharzbeschichtete Werkstückoberflächen den lackierten Werkstückoberflächen im Hinblick auf die erreichten haptischen Eigenschaften unterlegen sind. In der Wahrnehmung der Endkonsumenten fühlen sich melaminharzbasierte Oberflächen "plastikartig" an. Die haptische Wahrnehmung von melaminbeschichteten Oberflächen entspricht somit nicht dem Wunsch der meisten Konsumenten.

Darüber hinaus haben die bekannten supermatten und ultramatten Melaminharzbeschichtungen (Glanzgrad zwischen 1 bis 5 Punkten bei 60° Messwinkel) keine sogenannten "Antifingerprint"-Eigenschaften. Derartige Ultramatt-Oberflächen wären aber mit einem funktionierenden Antifingerprint-Effekt (Berührungen mit Fingern und Übertragung von Hautfett werden auf der Ultramatt-Oberfläche wenig bis gar nicht sichtbar) wünschenswert.

Des Weiteren sind melaminharzbasierte Beschichtungen hydrolyseempfindlich und daher eingeschränkt chemikalienbeständig.

Ein weiterer Nachteil solcher rein mit Melaminharz beschichteten Oberflächen ist das Fehlen eines gut funktionierenden Graffitischutzes, also einer Behandlung der Oberfläche, so dass das Anhaften später aufgetragener Lacke oder Farben gehemmt oder verhindert wird.

Um die oben beschriebenen Nachteile wenigstens teilweise zu überwinden, wurden verschiedene Verfahren vorgeschlagen. So kann eine vorher erzeugte melaminharzbasierte Oberfläche mit einem geeigneten Primem und einem UV-härtenden Acryllacksystem veredelt und damit ultramatte Oberflächen mit dem beschriebenen "Antifingerprint-Effekt" erzielt werden. Dieses Vorgehen hat jedoch den Nachteil, dass die so hergestellten Beschichtungen nicht die gewünschte Kratzfestigkeit aufweisen.

EP 2 857 221 offenbart ein Verfahren, bei dem ein Dekor mittels einer Finishfolie (vorimprägniertes Papier) aufgebracht wird.

EP 2 743 094 offenbart ein Verfahren zur Herstellung einer mit einer Dekorschicht versehenen Werkstoffplatte, das einen Schritt umfasst, bei dem eine Harzschicht auf die dem Dekor gegenüberliegende Seite aufgetragen wird.

US 2009/197036 beschreibt einen mehrlagigen Holzfußboden sowie die Herstellung davon.

Des Weiteren wird von der Fa. DST Systemoberflächen ein verpressbarer Dekorfilm für Möbel- und Fußbodenoberflächen angeboten. Der Film basiert auf einem spaltfesten Dekorpapier, welches mit elektronenstrahlgehärteten Acrylaten (ESH-Verfahren) und einem Trennfilm versehen ist. Dieses Verfahren ist durch die notwendige ESH-Härtung in Kombination mit dem zusätzlich notwendigen Trennfilm sehr aufwendig.

Ein weiteres bekanntes Verfahren basiert auf einer speziellen PMMA-/PVDF-Folie, die als transparenter Film auf dem Melaminharzdekorfilm aufgelegt und verpresst wird. Diese Folie wurde für die Herstellung von Schichtstoffen für die Außenanwendung von der Fa. Evonik Röhm entwickelt. Die daraus hergestellten Oberflächen der Produkte sind relativ weich und haben den Nachteil einer unzureichenden Kratzfestigkeit.

Vor dem Hintergrund der Nachteile des oben beschriebenen Standes der Technik einerseits und dem Bedarf seitens des Verbrauchers andererseits befasst sich die vorliegende Erfindung mit der Aufgabe, ein Verfahren bereitzustellen, das wenigstens teilweise die Nachteile des Standes der Technik überwindet, sowie eine entsprechende Zusammensetzung (Beschichtung). Insbesondere soll durch die Erfindung ein besonders vorteilhaftes Oberflächeneigenschaftsprofil erreicht werden, das die oben genannten Eigenschaften, wie hohe Kratz- und Verschleißfestigkeit, Widerstandsfähigkeit gegen Chemikalien, Reinigungsfreundlichkeit, Haptik und Antifingerprint-Eigenschaften kombiniert. Des Weiteren soll die Erfindung mit vorhandener Kurztaktpressen-, Doppelbandpressen- und Mehretagepressentechnologie kompatibel sein, so dass verschiedene Kernlagen, insbesondere auch MDF-Platten und Spanplatten, die nur kurzzeitig hohen Temperaturen ausgesetzt werden dürfen, verarbeitet werden können.

Diese Aufgabe wird gelöst durch das erfindungsgemäße Verfahren zum Herstellen eines plattenförmigen Werkstückes gemäß Anspruch 1. Bevorzugte Ausführungsformen sind jeweils in den abhängigen Ansprüchen definiert.

Aus dem Stand der Technik ergibt sich zudem das Problem, dass gerade tiefmatte Oberflächen mit Glanzpunkten von weniger als 10 Glanzpunkten, besonders weniger als 5 Glanzpunkten mit dem Stand der Technik nur in dem anschließenden Pressverfahren durch Verwendung eines matten Strukturgebers, z.B. einer matten Folie (vgl. Surteco P850 Antifingerprint-Folie) oder unter der Verwendung eines Presswerkzeuges, eines sogenannten Pressbleches, möglich ist.

Die Verwendung eines matten Strukturgebers oder eines Presswerkzeugs ist einerseits wirtschaftlich sehr aufwendig, da die oben genannte matte Folie einen relevanten Kostenfaktor darstellt und, falls überhaupt, nur unter bestimmten Bedingungen und nur für eine sehr begrenzte Anzahl von Zyklen wiederverwendet werden kann. Bei bestimmten Verfahren, beispielsweise diskontinuierlichen Prozessführungen wie dem KT-Verfahren, ist ein Widerverwenden der Folie nicht möglich, da sich die Folie nur sehr schlecht handhaben lässt.

Zum anderen ist es bei der Verwendung von Blechen durch die Kosten der Strukturierung der Prägebleche ungünstig sowie durch den Zeitaufwand beim Wechsel der Prägebleche gegenüber einer vorangehenden Produktion, z.B. mit Hochglanz- oder anderen Strukturen.

Damit ist es eine weitere Aufgabe der vorliegenden Erfindung, ein Verfahren bereitzustellen, mit dem die zusätzlichen Kosten durch Prägewerkzeuge oder Prägefolien vermieden werden können und ein schneller Wechsel in der Oberflächenstruktur von tiefmatt zu höherem Glanzgrad oder einer sonstigen Struktur ermöglicht werden kann. Es ist auch eine weitere Aufgabe der Erfindung, ein Verfahren bereitzustellen, mit dem gewünschte Oberflächen, wie z.B. eine Alutex- oder Pearl-Oberfläche, oder gewünschte Optiken, z.B. eine Holzoptik, in Bezug auf beispielsweise Optik, Haptik und Herstellungsverfahren mindestens zufriedenstellend hergestellt werden können. Auch diese Aufgabe wird durch das Verfahren gemäß Anspruch 1 gelöst, mit den bevorzugten Ausführungsformen wie sie in den abhängigen Ansprüchen definiert sind.

Die Erfindung betrifft insbesondere die folgenden Ausführungsformen:
Die Erfindung betrifft ein Verfahren zum Herstellen eines plattenförmigen Werkstückes, umfassend die Schritte (A) bis (F):
Schritt (A) ist die Beschichtung einer Trägerbahn (1) mit einer ersten flüssigen, thermisch vernetzbaren Beschichtungsmasse (2).
Schritt (B) ist die Trocknung der beschichteten Trägerbahn (1, 2) bei Bedingungen, unter denen die erste flüssige Beschichtungsmasse (2) teilweise vernetzt wird, bevorzugt teilweise thermisch vernetzt wird.
Schritt (C) ist die weitere Beschichtung der Trägerbahn (1, 2) aus Schritt (B) mit (C1) oder (C2), um so einen beschichteten Film zu erhalten. (C1) ist eine zweite flüssige polymerisierbare Beschichtungsmasse (2a), die ein unter Einfluss von elektromagnetischer Strahlung vernetzbares (aushärtbares) Einkomponenten-Lacksystem ist. (C2) ist eine zweite flüssige polymerisierbare Beschichtungsmasse (2b), die ein unter Einfluss von elektromagnetischer Strahlung vernetzbares (beispielsweise mittels Polyadditionsreaktion, und/oder mittels Polymerisation) Zweikomponenten-Lacksystem ist.
Schritt (D) ist die Bestrahlung des beschichteten Films aus Schritt (C) mit UV-Strahlung von weniger als 300 nm Wellenlänge derart, dass sich auf der von der Beschichtungsmasse (2) abgewandten Oberfläche der zweiten flüssigen polymerisierbaren Beschichtungsmasse (2a) oder (2b) eine vernetzte (bevorzugt polymierisierte) Mikrostruktur mit einer Strukturtiefe von weniger 10 µm ausbildet (Excimerbehandlung), wobei optional vor und/oder nach der UV-Bestrahlung ein weiterer Bestrahlungsschritt zur weiteren Vernetzung (bevorzugt Polymerisation) der Beschichtungsmasse (2a) oder (2b) erfolgt.
Schritt (E) ist die Herstellung eines mehrschichtigen Aufbaus umfassend mindestens eine beschichtete Trägerbahn (1, 2, 2a/2b) und mindestens eine Kernlage (3).
Schritt (F) ist die Verpressung des mehrschichtigen Aufbaus, um die erste thermisch vernetzbare Beschichtungsmasse (2) und die zweite flüssige polymerisierbare Beschichtungsmasse (2a) oder (2b) vollständig zu vernetzen (bevorzugt auszuhärten).

Der Begriff "vernetzt" bzw. "vernetzbar" in der vorliegenden Erfindung bezieht sich allgemein auf die Fähigkeit eines Stoffes, z.B. eines Moleküls, zu einem ein-, zwei- oder mehrdimensionalen Netzwerk, bevorzugt zu einem zwei- oder mehrdimensionalen Netzwerk, verknüpft werden zu können. Diese Vernetzung kann beispielsweise durch Polymerisation, Polyaddition oder Polykondensation erfolgen. Die Vernetzung kann beispielsweise durch Strahlung (UV-Strahlung) oder thermisch induziert werden. Je nach fortschreitendem Grad der Vernetzung (erfolgt beispielsweise entweder durch Polymerisation, Polyaddition, oder Polykondensation) verändert sich die Eigenschaft des Stoffes, beispielsweise in Bezug auf die Härte, Zähigkeit, oder Löslichkeit. Im Allgemeinen nimmt die Härte eines Stoffes mit zunehmender Vernetzung zu.

Im Sinne der vorliegenden Erfindung wird beispielsweise ein polymerisierbarer PTX-Acrylatlack (wie z.B. die polymerisierbare Beschichtungsmasse 2a oder 2b) als vollständig ausgehärtet bezeichnet, wenn der Doppelbindungsumsatz in Bezug auf den Acrylatanteil mindestens 65 %, bevorzugt mindestens 70 %, und noch mehr bevorzugt mindestens 75 % oder 80 % beträgt.

Je nach Bestandteilen (Komponenten) der jeweiligen Beschichtungsmasse erfolgt die Vernetzung durch Polymerisation, Polykondensation, oder Polyaddition.

Falls in Schritt (D) nach der Excimerbehandlung zur Ausbildung einer Mikrostruktur ein weiterer Bestrahlungsschritt zur weiteren Vernetzung (Aushärtung bzw. Härtung) durchgeführt wird, führt dieser Bestrahlungsschritt nicht zu einer vollständigen Vernetzung (Aushärtung bzw. Härtung) der Beschichtungsmasse (2a) oder (2b).

In einer Ausführungsform des Verfahrens weist die UV-Strahlung eine Wellenlänge von weniger als 250 nm, besonders bevorzugt weniger als 200 nm auf, und/oder die zweite flüssige polymerisierbare Beschichtungsmasse (2a) ist ein Einkomponentensystem auf der Basis eines Acryllackes.

Bevorzugt enthält die zweite flüssige polymerisierbare Beschichtungsmasse (2a) keine Härterkomponente, sodass eine thermische Härtung ausschließlich auf Basis einer Polymerisation stattfindet. Eine Fixierung der Mikrostruktur erfolgt durch eine Zwischenvernetzung (Vorpolymerisation) im Schritt D. Die vollständige Aushärtung (Polymerisation) erfolgt während des Heißpressvorganges durch den Einsatz mindestens eines oder eines Gemisch von Peroxiden.

In einer Ausführungsform des Verfahrens weist die gebildete Mikrostruktur eine Strukturtiefe von weniger als 5 µm auf.

In einer Ausführungsform des Verfahrens werden eine oder mehrere Kernlagen verwendet, wobei diese flexibel oder rigide sind.

In einer Ausführungsform des Verfahrens wird die Verpressung in Schritt (F) bei einer Temperatur von größer als 110 °C und einem Druck von mehr als 5 bar, insbesondere mehr als 20 bar, durchgeführt.

In einer Ausführungsform wird die Verpressung in Schritt (F) bei einer Temperatur von größer als 110 °C und bis zu 240°C, bevorzugt bis zu 210°C, und einem Druck von mehr als 5 bar, insbesondere mehr als 20 bar, durchgeführt.

In einer Ausführungsform des Verfahrens werden eine oder mehrere Holzwerkstoffplatte(n) als Kernlage(n) verwendet, wobei die Holzwerkstoffplatte(n) Span-, MDF-, oder HDF-Platten sind.

In einer Ausführungsform des Verfahrens ist das mittels elektromagnetischer Strahlung vernetzbare (aushärtbare) (Einkomponenten)-Lacksystem ein Acryllacksystem, bevorzugt ein Acryllacksystem, ausgewählt aus der Gruppe bestehend aus Mono-, di- und polyfunktionellen Monomeren, insbesondere Phenoxyethylacrylat, Hexandioldiacrylat, Dipropylenglykoldiacrylat, Trimethylolpropantriacrylat und Trimethylolpropantrimethacrylat.

In einer Ausführungsform des Verfahrens ist das mittels elektromagnetischer Strahlung vernetzbare (aushärtbare) (Einkomponenten)-Lacksystem mittels UV-Strahlung von weniger als 300 nm, besonders bevorzugt weniger als 200 nm, aushärtbar.

Das mit elektromagnetischer Strahlung teilweise vernetzbare (aushärtbare) (Zweikomponenten)-Lacksystem ist auch mittels UV-Strahlung von weniger als 300 nm, bevorzugt weniger als 200 nm, besonders bevorzugt mit UV-Strahlung von 172 nm, aushärtbar.

In einer Ausführungsform des Verfahrens wird die UV-Strahlung mit einem Excimer-Laser unter Verwendung von Stickstoff (technische Qualität, 5.0, Reinheit > 99.999 %) erzeugt.

In einer Ausführungsform des Verfahrens umfasst der mehrschichtige Aufbau zwischen der mindestens einen beschichteten Trägerbahn (1, 2, 2a/2b) und der mindestens einen Kernlage (3) mindestens eine Lage eines gegebenenfalls mit einem duroplastischen Harz imprägnierten Papiers (4).

In einer Ausführungsform des Verfahrens wird der mehrschichtige Aufbau höchstens 5 min, vorzugsweise höchstens 2 min und weiter bevorzugt höchstens 60 s und insbesondere zwischen 5 s und 45 s, oder noch mehr bevorzugt zwischen 5 s und 30 s, in Schritt (F) verpresst, um die erste Beschichtungsmasse (2) und die Beschichtungsmasse (2a/2b) vollständig zu vernetzen (auszuhärten).

In einer Ausführungsform des Verfahrens erfolgt die Verpressung in Schritt (F) in einer Kurztaktpresse innerhalb eines Zeitraumes von weniger als 60 s, bevorzugt weniger als 45 s, noch mehr bevorzugt weniger als 30 s.

Schritt (F) wird bevorzugt bei erhöhter Temperatur durchgeführt, so dass die Beschichtungsmasse (2) und zweite flüssige polymerisierbare Beschichtungsmasse (2a/2b) vollständig vernetzt (aushärtet).

Bevorzugt ist es hierbei, dass die erste Beschichtungsmasse (2) und optional die zweite flüssige Beschichtungsmasse (2b) bzw. (2a) einen Initiator enthält, der eine Zerfallstemperatur aufweist, so dass während der Verpressung die vollständige Vernetzung (Aushärtung) der polymerisierbaren ersten Beschichtungsmasse (2) **und der** zweiten Beschichtungsmasse (2a) bzw. (2b) innerhalb von höchstens 5 min, vorzugsweise höchstens 2 min und weiter bevorzugt höchstens 60 s und insbesondere zwischen 5 und 45 s, insbesondere bevorzugt zwischen 5 und 30 s, erfolgt.

Während der Verpressung erfolgt also eine vollständige Vernetzung der Beschichtung.

In einer Ausführungsform weist der Initiator eine Zerfallstemperatur, bezogen auf eine Halbwertszeit von 10 min, von 120 bis 145°C, vorzugsweise von 125 bis 140°C, weiter bevorzugt von 130 bis 135°C und insbesondere 132 ± 2°C auf.

In einer bevorzugten Ausführungsform des Verfahrens ist der Initiator ausgewählt aus der Gruppe bestehend aus organischen Peroxiden und/oder Azoinitiatoren. Bevorzugt ist das organische Peroxid ausgewählt aus Initiatoren der Gruppe bestehend aus Alkylperoxiden, Peroxyestern, Hydroperoxiden, Acylperoxiden, Peroxycarbonaten und Peroxyketalen, insbesondere Peroxyketalen. In einer bevorzugten Ausführungsform ist der aus der Gruppe der Peroxyketalen ausgewählte Initiator ein Cycloalkanderivat, vorzugsweise ein Cyclohexanderivat und insbesondere 1,1-Di-(tert-Butylperoxy)cyclohexan.

In einer Ausführungsform des Verfahrens setzt sich die erste Beschichtungsmasse (2) aus nachfolgenden Komponenten zusammen:
- 0.01 - 5, vorzugsweise 0.05 - 2 und insbesondere 0.1 bis 1 Gewichtsteile Initiator;
- 30 - 90, vorzugsweise 40 - 80 und insbesondere 50 - 70 Gewichtsteile Harzkomponente;
- 5 - 40, vorzugsweise 10 - 35 und insbesondere 15 - 30 Gewichtsteile Härterkomponente;
- optional 5 - 40, vorzugsweise 10 - 30 und insbesondere 15 bis 25 Gewichtsteile Lösemittel oder Reaktivverdünner; und
- optional 1 - 10, vorzugsweise 1 - 7 und insbesondere 2 - 5 Gewichtsteile zusätzlicher Additive.

In einer Ausführungsform des Verfahrens erfolgt in Schritt (D) nach Bestrahlung des beschichteten Films aus Schritt (C) mit UV-Strahlung von weniger als 300 nm Wellenlänge (Excimerbehandlung) eine weitere Vernetzung (Aushärtung) von tieferliegenden Schichten mit UV-Strahlung, wobei die der Mikrostruktur abgewandte Seite der Beschichtungsmasse (2a)/(2b) nicht vollständig vernetzt (ausgehärtet) wird.

Diese weitere, jedoch nicht vollständige Vernetzung (Aushärtung) der zweiten flüssigen polymerisierbaren Beschichtungsmasse (2a/2b) wird durchgeführt, damit diese Schicht ausreichend vernetzt (ausgehärtet) ist, um eine Weiterverarbeitbarkeit zu gewährleisten.

Optional kann vor dieser weiteren Aushärtung und vor der Excimerbehandlung eine Vorvernetzung (bevorzugt Vorpolymerisation) wie hierin beschrieben durchgeführt werden.

In einer bevorzugten Ausführungsform wird vor der Excimerbehandlung keine Vorvernetzung (Vorpolymerisation) durchgeführt, nach der Excimerbehandlung jedoch eine weitere, jedoch nicht vollständige, Aushärtung der zweiten flüssigen polymerisierbaren Beschichtungsmasse (2a/2b).

In einer Ausführungsform des Verfahrens setzt sich die zweite polymerisierbare Beschichtungsmasse (2a) aus nachfolgenden Komponenten zusammen:
- 30 - 90, vorzugsweise 40 - 80 und insbesondere 50 - 70 Gewichtsteile Urethanacrylatharz;
- 5 - 40, vorzugsweise 10 - 35 und insbesondere 15 - 30 Gewichtsteile mono- oder difunktionelle Acrylate;
- optional 5 - 40, vorzugsweise 10 - 35 und insbesondere 15 bis 230 Gewichtsteile trifunktionelle Acrylate; und
- optional 1 - 10, vorzugsweise 1 - 7 und insbesondere 2 - 5 Gewichtsteile zusätzlicher Additive.
0.01 - 8, vorzugsweise 0.05 - 5 und insbesondere 0.1 bis 3 Gewichtsteile Initiator für UV- und thermische Härtung.

In einer Ausführungsform des Verfahrens basiert die erste flüssige Beschichtungsmasse (2) auf einem Polyurethanacrylat-Harzsystem.

In einer Ausführungsform des Verfahrens ist die Kernlage (3) ausgewählt aus einer oder mehreren Schichtstofflagen, MDF-Platten, Spanplatten, Kunststoffplatten, Kunststoff-Holzgemischen (WPC-Platten) und Papierlagen.

In einer Ausführungsform des Verfahrens dient ein nicht-gefülltes Papier als zu beschichtende Trägerbahn (1).

In einer Ausführungsform des Verfahrens ist die zu beschichtende Trägerbahn (1) nicht mit einem Aminoplastharz imprägniert.

In einer Ausführungsform des Verfahrens ist die zu beschichtende Trägerbahn (1) mit einem Aminoplast- oder Polyurethanharz imprägniert.

In einer Ausführungsform des Verfahrens beträgt das Flächengewicht des Aminoplastharzes nach der Trocknung 20 bis 300 g/qm, bevorzugt 45 bis 180 g/qm und die Volatilität beträgt weniger als 9 Gewichts-%, bevorzugt 7 - 8 Gewichts-% oder weniger.

In einer Ausführungsform des Verfahrens weisen die erste flüssige Beschichtungsmasse (2) und zweite flüssige polymerisierbar Beschichtungsmasse (2a, 2b) einen oder mehrere nanoskalige Füllstoffe auf.

Das Vorhandensein von nanoskaligen Füllstoffen in der ersten flüssigen Beschichtungsmasse (2) und in der zweiten flüssigen polymerisierbaren Beschichtungsmasse (2a, 2b) führt zu einer (weiteren) Erhöhung der Kratzfestigkeit. Um eine gegenüber herkömmlichen Ausführungsformen verbesserte Kratzfestigkeit zu erhalten, ist es jedoch nicht nötig, dass nanoskalige Füllstoffe in der Beschichtungsmasse (2, 2a, 2b) vorhanden sind.

In einer Ausführungsform des Verfahrens sind der eine oder die mehreren nanoskaligen Füllstoffe ausgewählt aus der Gruppe bestehend aus anorganischer Dispersion, insbesondere eine Dispersion von kolloidalen Siliziumoxid- und/oder Aluminiumoxidbasierten Nanopartikeln.

In einer Ausführungsform des Verfahrens weist das plattenförmige Werkstück eine Kratzfestigkeit von mindestens 4N in Verbindungen mit einer Mikrokratzfestigkeit von mindestens Grad 4 gemäß DIN EN 438 auf; und/oder das plattenförmige Werkstück weist einen Glanzgrad zwischen 1,0 bis 3,5, bevorzugt zwischen 1,3 bis 2,8, mehr bevorzugt zwischen 1,5 bis 2,5 Glanzeinheiten (GE) auf, gemessen bei einem Reflexionswinkel von 60 Grad; und einen Glanzgrad zwischen 5 und 26, bevorzugt zwischen 7 und 25, mehr bevorzugt zwischen 9 und 23.5 GE, gemessen bei einem Reflexionswinkel von 85 Grad; wobei der Glanzgrad nach dem Standard ASTM D 523 bei einem Reflexionswinkel von 60 Grad und 85 Grad jeweils in und quer zur Laufrichtung mit einem Dreier-Mittelwert bei Umgebungsbedingungen von 20-25°C, bevorzugt 20°C, und einer relativen Luftfeuchtigkeit von 40-60%, bevorzugt 40%, mit dem Prüfgerät micro-TRI-gloss Dreiwinkel-Glanzmesser der Firma BYK-Gardner GmbH gemessen wird.

In einer bevorzugten Ausführungsform des Verfahrens weist das plattenförmige Werkstück sowohl die hierin definierte Kratzfestigkeit und Mikrokratzfestigkeit, also auch die hierin definierten Glanzgrade auf.

In einer Ausführungsform des Verfahrens wird die Kernlage (3) erst während der Verpressung in Schritt (F) zu einem festen, plattenförmigen Werkstück.

In einer Ausführungsform des Verfahrens ist/sind die zu beschichtende Trägerbahn (1) und/oder das ggfs. mit einem duroplastischen Harz imprägnierte Papier (4) dekorativ bedruckt.

In einer Ausführungsform des Verfahrens ist die flüssige polymerisierbare Beschichtungsmasse (2b) ein Zweikomponentensystem auf der Basis eines Polyurethanacrylat-Harzsystems.

In einer Ausführungsform des Verfahrens setzt sich die polymerisierbare Beschichtungsmasse (2b) aus nachfolgenden Komponenten zusammen:
- 30 - 90, vorzugsweise 40 - 80 und insbesondere 50 - 70 Gewichtsteile Harzkomponente;
- 5 - 40, vorzugsweise 10 - 35 und insbesondere 15 - 30 Gewichtsteile Härterkomponente;
- optional 5 - 40, vorzugsweise 10 - 30 und insbesondere 15 bis 25 Gewichtsteile Lösemittel oder Reaktivverdünner, bevorzugt Reaktivverdünner; und
- optional 1 - 10, vorzugsweise 1 - 7 und insbesondere 2 - 5 Gewichtsteile zusätzliche Additive, insbesondere 1,1-Di-(tert-butylperoxy)cyclohexan und Photoinitiatoren, bevorzugt Photoinitiatoren der Klasse I.

In einer bevorzugten Ausführungsform des Verfahrens setzt sich die polymerisierbare Beschichtungsmasse (2b) aus den nachfolgenden Komponenten zusammen:
- 30 - 90, vorzugsweise 40 - 80 und insbesondere 50 - 70 Gewichtsteile Harzkomponente;
- 5 - 40, vorzugsweise 10 - 35 und insbesondere 15 - 30 Gewichtsteile Härterkomponente;
- 5 - 40, vorzugsweise 10 - 30 und insbesondere 15 bis 25 Gewichtsteile Reaktivverdünner; und
- optional 1 - 10, vorzugsweise 1 - 7 und insbesondere 2 - 5 Gewichtsteile zusätzliche Additive, insbesondere 1,1-Di-(tert-butylperoxy)cyclohexan und Photoinitiatoren, bevorzugt Photoinitiatoren der Klasse I.

Ebenfalls offenbart hierein ist eine flüssige, thermisch vernetzbare Beschichtungsmasse (2) die zur Durchführung des Verfahrens nach einer der vorangegangenen Ausführungsformen geeignet ist, wobei die Beschichtungsmasse (2) auf Basis eines Polyurethanacrylat-Harzsystems mit einem Initiator, der eine Zerfallstemperatur aufweist, ist, so dass während der Verpressung die vollständige Vernetzung (Aushärtung) der Beschichtungsmasse (2) innerhalb von höchstens 5 min, vorzugsweise höchstens 2 min und weiter bevorzugt höchstens 60 s und insbesondere zwischen 6 und 45 s erfolgt, noch weiter bevorzugt zwischen 6 und 30 s erfolgt, und/oder während der Verpressung eine vollständige Vernetzung (Aushärtung) der Beschichtung erfolgt.

Die hierein offenbarte Beschichtungsmasse ist wie in einem der oben genannten Ausführungsformen definiert.

Ebenfalls offenbart hierein ist eine beschichtete Trägerbahn, hergestellt oder herstellbar durch ein Verfahren gemäß einer der hier offenbarten Ausführungsformen.

Ebenfalls hierin offenbart ist ein plattenförmiges Werkstück mit mattierter Oberfläche, umfassend (a), (b), (c), und (d1) oder (d2):
(a) ist eine Kernlage (3),
(b) ist eine Trägerbahn (1), die ein dreidimensionales Muster aufweist und die sich auf der Kernlage (3) befindet,
(c) ist eine Polyurethanacrylat-Harz-Polymerschicht (2) die sich auf der Trägerbahn (1) befindet, wobei die Polymerisierung bei einer Temperatur von größer als 110 °C und einem Druck von mehr als 5 bar, insbesondere mehr als 20 bar, erfolgt ist,
(d1) ist eine weitere Acryllack-Polymerschicht (2a) auf der Polymerschicht (2), die durch Bestrahlung mit UV-Strahlung von weniger als 400 nm Wellenlänge, und einem Pressvorgang wie hierin beschrieben, vernetzt (ausgehärtet) worden ist, und
(d2) ist eine weitere Polyurethanacrylat-Harzschicht (2b) auf der Polymerschicht (2), die durch Bestrahlung mit UV-Strahlung von weniger als 400 nm Wellenlänge, und einem Pressvorgang wie hierin beschrieben, vernetzt (ausgehärtet) worden ist.

In einer Ausführungsform ist/sind die Kernlage (3), die Trägerbahn (1), die Polymerschicht (2) und/oder die Polymerschicht (2a/2b) des plattenförmigen Werkstücks wie hierein in Bezug auf das Verfahren offenbart definiert.

Ebenfalls hierin beschrieben ist ein plattenförmiges Werkstück hergestellt oder herstellbar durch das hierin offenbarte Verfahren.

Ebenfalls hierein offenbart ist die Verwendung einer zweiten flüssigen, polymerisierbaren Beschichtungsmasse (2a) oder (2b) wie hierin definiert, in Kombination mit einer ersten Beschichtungsmasse (2) wie hierin definiert, zur Beschichtung und/oder Herstellung eines plattenförmigen Werkstückes in einem Kurztaktpressverfahren.

In einer Ausführungsform des Verfahrens weist die zweite polymerisierbare Beschichtungsmasse (2a/2b) eine Viskosität (Rotationsviskosimetrie) bei 25°C von 180 bis 2500 mPa.s, insbesondere 600 bis 900 mPa.s auf.

In einer Ausführungsform des Verfahrens umfasst die zweite flüssige, polymerisierbare Beschichtungsmasse (2a/2b) ein Oberflächenadditiv aus der Gruppe der Tenside, bevorzugt zur Verbesserung der Trenneigenschaft der zweiten polymerisierbaren Beschichtungsmasse (2a/2b) während eines Heißpressvorgangs. In einer bevorzugten Ausführungsform des Verfahrens ist das Oberflächenadditiv ein Silikontensid, insbesondere ein polyethermodifiziertes Polydimethylsiloxan und/oder ein Silikontensid mit freien Acrylatgruppen, vorzugsweise ein Silikondiacrylat oder Silikonhexaacrylat.

In einer Ausführungsform des Verfahrens enthält die Beschichtungsmasse (2a)/(2b) einen Photoinitiator, der keine Phosphinoxid-Strukturelemente aufweist. In einer Ausführungsform des Verfahrens liegt der Photoinitiator in einer Menge bis zu 1 Gew.-%, insbesondere weniger als 0.3 Gew.-%, vor.

In einer Ausführungsform des Verfahrens liegt das trifunktionelle Acrylat als Trimethylolpropantriacrylat (TMPTA), vorzugsweise Trimethylolpropanmethacrylat (TMPTMA)vor, insbesondere mit der Funktion eines Vernetzer im Heißpressvorgang.

In einer Ausführungsform des Verfahrens wird in Schritt (A) die erste flüssige Beschichtungsmasse (2) aus der Gruppe der Aminoharze oder aus Gemischen von solchen Harzen, insbesondere von Melaminharzen, Phenolharzen, oder von Gemischen enthaltend diese Harze sowie Anteile von acrylatfunktionellen Bindemitteln, ausgewählt, und die Beschichtung der Trägerbahn kann auch zu einer vollständigen oder teilweisen Penetration der Trägerbahn mit der ersten Beschichtungsmasse (2) führen.

Das erfindungsgemäße Verfahren löst das oben beschriebene Problem aus dem Stand der Technik dadurch, dass zusätzlich zu der oben beschriebenen ersten flüssigen, thermisch vernetzbaren Beschichtungsmasse (hierin auch als "PTC"-Schicht oder "PTC-Lackschicht" bezeichnet) auf der Trägerbahn, d.h. nach dem Trocknen dieser flüssigen Beschichtung in einem Trocknungsofen beispielsweise unter Verwendung von beheizter Luft und/oder mittels IR-Strahlern, eine weitere flüssige Beschichtung (zweite flüssige polymerisierbare Beschichtung/Beschichtungsmasse, hierin auch als "PTX"-Schicht oder "PTX-Lackschicht" 2a bzw. 2b bezeichnet) auf die so erhaltene beschichtete Trägerbahn (Folie) aufgetragen werden kann, welche derartig ausgeführt ist, dass sie durch elektromagnetische Strahlung (vollständig oder teilweise, bevorzugt teilweise) vernetzt (ausgehärtet) werden kann. Nach dem Auftragen der zweiten flüssigen polymerisierbaren Beschichtung/Beschichtungsmasse wird der so erhaltene beschichtete Film einer Bestrahlungseinheit mit elektromagnetischer Strahlung zugeführt, bei der die Oberfläche der zweiten flüssigen polymerisierbaren Beschichtung/Beschichtungsmasse mit elektromagnetischer Strahlung im höherenergetischen UV-Bereich von weniger als 300 nm, besonders bevorzugt im Bereich um 172 nm (besonders bevorzugt mit einer Wellenlänge von 172 nm) bestrahlt wird (sogenannte "Excimerbehandlung") und dadurch eine ausgehärtete Mikrofaltung der Oberfläche entsteht. Dieser Vernetzungsschritt (bevorzugt Polymerisierungsschritt) kann beispielsweise zu einer ausgehärtete Mikrofaltung einer Oberflächenschicht von bis zu 3 µm führen. Die dadurch entstehende Faltung kann beispielsweise eine Höhenstruktur von 1 bis zu 15 µm aufweisen.

Optional kann vor der Bestrahlung mit elektromagnetischer Strahlung im höherenergetischen UV-Bereich von weniger als 300 nm (Excimerbehandlung) eine Vorbehandlung, beispielsweise mit LED/Ga-Lampe zur Vorvernetzung (Vorpolymerisation) erfolgen. In einer bevorzugten Ausführungsform erfolgt diese Vorvernetzung (Vorpolymerisation). Diese Vorvernetzung (Vorpolymerisation) erfolgt bevorzugt durch Bestrahlung mit UV-Licht der Wellenlänge im Bereich zwischen 200 nm bis 420 nm, bevorzugt im Bereich zwischen 280 nm bis 420 nm. Dadurch kann die Profiltiefe der Mikrostruktur eingestellt werden. Nach der Bestrahlung mit elektromagnetischer Strahlung (nach der Excimerbehandlung) kann eine Zwischenvernetzung (Zwischenhärtung) der zweiten polymerisierbaren Beschichtungsmasse 2a oder 2b mit Hg und/oder Ga-Bogenlampe erfolgen. Die zweite Beschichtungsmasse muss soweit vorvernetzt (vorpolymerisiert) werden, dass die Wickelfähigkeit und mechanische Widerstandsfähigkeit (ausreichend für Produktionsablauf und Transport) des lackierten Dekorpapieres oder Overlay gegeben ist. Das erfindungsgemäße Verfahren gewährleistet eine Planheit des lackierten Trägermaterials, sodass eine Weiterverarbeitbarkeit sowohl als Bahnware als auch als Blattware geben ist. Die Oberflächenhärte ist somit einer der Zielparameter des PTX-Verfahrens.

Es hat sich gezeigt, dass eine wie oben beschriebene Vorbehandlung (auch Vorpolymerisation oder Vorvernetzung genannt) insbesondere in Abhängigkeit von der Auftragsmenge der zweiten flüssigen polymerisierbaren Beschichtungsmasse vorteilhaft sein kann: In einer bevorzugten Ausführungsform wird eine Vorbehandlung ab einer Auftragsmenge von ungefähr 6-9 g/m2 durchgeführt. Optional kann alternativ oder zusätzlich zur Vorbehandlung nach der Bestrahlung mit elektromagnetischer Strahlung im höherenergetischen UV-Bereich von weniger als 300 nm (Excimerbehandlung) eine weitere Vernetzung (Härtung) der tieferliegenden Schichten, beispielsweise mit einer Hochdruck-UV Lampe, erfolgen. In einer bevorzugten Ausführungsform wird diese Härtung zwingend durchgeführt, insbesondere falls eine wie oben beschriebene Vorbehandlung stattgefunden hat. Eine weitere Härtung kann aber auch durchgeführt werden, obwohl (oder wenn) keine Vorpolymerisation durchgeführt worden ist.

Bei der weiteren Vernetzung (Härtung) darf die der Mikrostruktur gegenüberliegende Oberfläche der zweiten flüssigen polymerisierbaren Beschichtung/Beschichtungsmasse nicht vollständig vernetzt (ausgehärtet) werden, damit die beiden Schichten (2 und 2a bzw. 2b) nach der weiteren Verarbeitung in einer Heißpresse unter Druck und Temperatur aneinander haften. Durch diesen Pressvorgang wird auch eine gewünschte Oberflächenglätte (Makrostruktur) erreicht.

Die Haftung der Beschichtungen kann z.B. über Einstellen des Vernetzungsgrades der Acrylate der jeweiligen Lackschicht (z.B. Vernetzung der Acrylate der PTC Lackschicht 2 mit den Acrylaten der PTX Lackschicht 2a bzw. 2b) kontrolliert werden. In einer Ausführungsform der vorliegenden Erfindung werden bei der Excimerbehandlung und der nachfolgenden Bestrahlung (z.B. mit einer Gallium dotierten UV-Mitteldrucklampe mit 20-35 W/cm) die Acrylatfunktionen im Bindemittel oder in den freien Monomeren nicht vollständig vernetzt (ausgehärtet). Während des Pressvorgangs (Schritt F) vernetzen dann diese noch nicht vollständig vernetzten (ausgehärteten) Acrylate der PTC Lackschicht mit den noch freien Acrylaten der PTX Lackschicht, was schließlich zu einer ausreichenden interfacilen Haftung führt. Es wurde gefunden, dass die Kontrolle der Haftung des PTX Lackes weniger über die (Teil-)Aushärtung durch die Bestrahlungsintensität der GA (Gallium)- und/oder Hg (Quecksilber)-Bogenlampe, als vielmehr durch die Verwendung von geeigneten Acrylaten wie z.B. sterisch gehinderten Acrylaten (z.B. TMPTA oder TMPTMA) erreicht werden kann. Besonders geeignet ist hierbei das Methacrylat TMPTMA (z.B. in einer Menge von 10 Gew.-%).

Eine zu hohe Strahlendosis der Gallium-Bogenlampe bewirkt eine zu starke Schrumpfung des Lackbettes, was zu Nachteilen (beispielsweise einer Wellung des Dekorpapiers) führen kann. Es wurde gefunden, dass der optimale Leistungsbereich zwischen z.B. 15 und 50% liegt, insbesondere bei 20 %.

Die Leistungsintensität der Bogenlampe hat keinen Einfluss auf Eigenschaften wie beispielsweise Kratzfestigkeit oder optisches Erscheinungsbild. Die Bogenlampe dient dem Durchhärten des flüssigbeschichteten UV-Lackes, so dass die Wickelfähigkeit gegeben ist. Die Kratzfestigkeit der unverpressten Lackoberfläche liegt z.B. bei ca. 1,5 N. Die eventuell erzeugten Mikrokratzer bei Auf- und/oder Abwicklungsvorgang können sogar bei der anschließenden Verpressung verschwinden. Somit liegt eine mechanisch robuste Lackoberfläche vor und die Gefahr von prozessbedingten Oberflächenbeschädigungen besteht hiermit nicht.

Das Grundprinzip des erfindungsgemäßen Verfahrens ist also ein mehrstufiger Prozess, bei dem eine erste flüssige Beschichtungsmasse auf eine Trägerbahn aufgebracht wird und (physikalisch) getrocknet wird, um in der flüssigen Beschichtungsmasse vorhandenes Lösemittel zumindest teilweise zu verdampfen. Hierbei wird die Beschichtungsmasse nur teilweise vernetzt (thermisch ausgehärtet). Die Trägerbahn ist dabei vorzugsweise vor dem Aufbringen der Beschichtungsmasse bereits mit einem duroplastischen Harz, vorzugsweise einem Aminoplastharz, behandelt worden. In einer alternativen Ausführungsform ist das oder sind die Lösemittel durch einen oder mehrere Reaktivverdünner ersetzt. Dabei sind die Trocknungsbedingungen derart auf die Beschichtungsmasse abgestimmt, dass eine Vorvernetzung erfolgt.

Diese Vorvernetzung der ersten flüssigen Beschichtungsmasse 2, die mit jeglichen geeigneten Methoden durchgeführt werden kann, kann ebenfalls die Wickelbarkeit des beschichteten Dekorpapiers gewährleisten. Insbesondere bevorzugt ist eine Vorvernetzung mit Konvektionswärme oder IR-Strahlung.

In einem nächsten Schritt dieses mehrstufigen Prozesses wird dann eine zweite flüssige, polymerisierbare Beschichtung (2a bzw. 2b) der im vorherigen Schritt erhaltenen Oberfläche, bevorzugt mit einem Acryllack-System, durchgeführt, sowie eine teilweise Vernetzung (Aushärtung) dieser flüssigen Beschichtung durch elektromagnetische Strahlung (Excimerbehandlung), so dass die Eigenschaft der Oberfläche, insbesondere die Reflexion von Licht derartig beeinflusst wird, dass die Oberfläche eine tiefmatte Struktur und Antifingerprint-Eigenschaften erhält.

Diese Schicht, welche bevorzugt eine Acryllack-Schicht ist, wird vorliegend immer als "zweite flüssige polymerisierbare Beschichtung/Beschichtungsmasse" bezeichnet. Bevorzugt weist diese Oberfläche nach dem Vernetzen (Aushärten) eine tiefmatte Struktur mit weniger als 5 (60 °) und unter 9 (85 °) Glanzpunkten auf. Die Bestimmung der Glanzpunkte erfolgt beispielsweise anhand eines Glanzgradmessgerätes bei 60 ° und 85 ° Reflexionswinkel nach DIN EN ISO 2813:2015-02. Diese matte (<10 GE, 85 °) und stupfmatte (< 5 GE, 85 °) Struktur ist gerade im Möbelbereich eine sehr gewünschte Eigenschaft, insbesondere in Kombination mit hoher Kratzfestigkeit, Widerstandsfestigkeit gegen Chemikalien und ähnliche Stoffe. Die flüssige Beschichtung kann auf unterschiedliche dekorative Bilder, wie z.B. Holz- oder Steindekore, Fantasiedekore oder auch unifarbene Flächen, die im Möbelbereich oder in anderen Anwendungsbereichen verwendet werden, aufgebracht werden.

Anschließend wird die derart behandelte (d.h. beschichtete) Trägerbahn als Oberflächenbeschichtung (mit zwei aufgetragenen Beschichtungsmassen, d.h. einer ersten flüssigen Beschichtungsmasse 2 und einer zweiten flüssigen polymerisierbaren Beschichtungsmasse 2a oder 2b) in einem mehrschichtigen Aufbau zusammen mit mindestens einer Kernlage angeordnet und unter Druck sowie bei erhöhten Temperaturen verpresst, so dass eine Vernetzungsreaktion und vollständige Aushärtung der ersten Beschichtungsmasse erfolgt.

Wie hierin ausgeführt, wird die zweite flüssige polymerisierbare Schicht in Schritt (D) bevorzugt nicht vollständig vernetzt (ausgehärtet). Durch diese nur teilweise Vernetzung der zweiten Beschichtungsmasse wird eine ausreichende Haftung der acrylathaltigen zweiten Beschichtungsschicht (PTX-Lack) auf der ersten Beschichtungsschicht (PTC-Lack) erreicht. Dies stellt sicher, dass das erfindungsgemäße Verfahren praxistauglich ist.

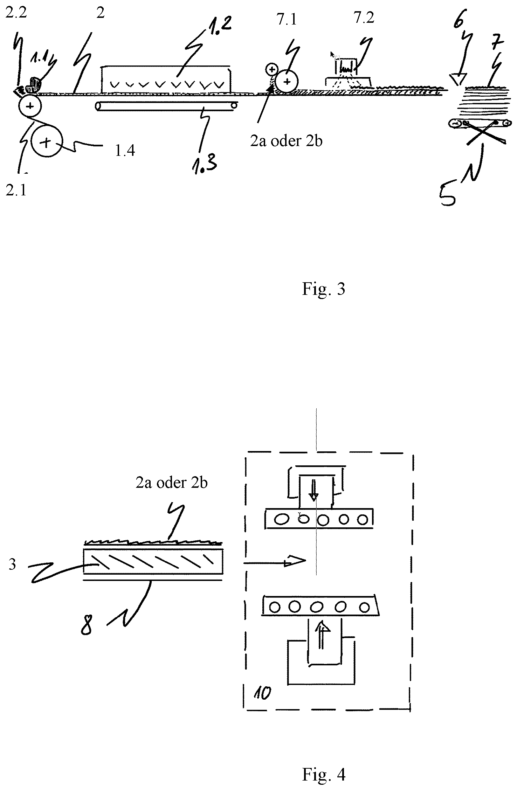

Die zweite Lackschicht (PTX Schicht (PTX-Lack) wird in einem ersten Schritt einer teilweisen Vernetzung unterzogen. Diese teilweise Vernetzung, die bevorzugt mit Hilfe eines Excimerlasers (z.B. 172 nm) ausgeführt wird, führt zu einer vollständigen Oberflächenaushärtung der zweiten Lackschicht. Die anschließende Tiefenhärtung (nur teilweise polymerisiert) wird beispielsweise durch eine Galliumdotierte Mitteldruck-UV-Lampe mit einer Leistung von beispielsweise 120 W/cm erreicht. Dies ist beispielsweise in Figur 3 dargestellt, wo die Bestrahlungseinheit aus einem Excimerlaser (für die Oberflächenhärtung) und einer UV-Lampe (für die Tiefenhärtung) besteht.

Durch die Beschichtung können Oberflächeneigenschaften wie z.B. Kratz- und Verschleißfestigkeit, Reinigungsfreundlichkeit, Haptik, sowie Widerstandsfähigkeit gegen Chemikalien positiv beeinflusst werden. Die Beschichtung kann grundsätzlich beliebig auf unifarbigen oder auch auf dekorativ gedruckten Dekoren (z.B. Holz, Stein, Fantasiedekore) aufgebracht werden.

Insbesondere das Auftragen der zweiten flüssigen polymerisierbaren Beschichtungsschicht (PTX-Schicht), in Verbindung mit einem Schritt des Verpressens, führt zu einer verbesserten (erhöhten) Kratzfestigkeit, ohne dass beispielsweise ein Anti-scratch-Additiv (z.B. aluminium- oder silicabasierte Nanopartikel, Feinkorund, siloxan-modifizierte Polyolefine, und ähnliche) zugegeben werden muss. Diese verbesserte Kratzfestigkeit liegt beispielsweise bei 4 N. Es wird angenommen, dass diese verbesserte Kratzfestigkeit bedingt ist durch die Kompression des Acrylatnetzwerkes während des Pressvorgangs, sowie durch eine höhere Umsetzung der freien Acrylat-Funktionalität. Der Doppelbindungsumsatz liegt im Fall einer herkömmlichen UV-Härtung (UV-Mitteldrucklampen, Typ Hg oder Gallium dotiert) bei 40-60 %. Der thermisch verpressbare PTC-Lack besitzt einen Gesamtumsatz der Acrylat-Gruppen von mehr als 90 %. Der Umsatz des dem PTX-Verfahren zugrundeliegenden Acrylatlacks liegt laut einer FT-IR Messung zwischen 75-85 %.

Gemäß einer bevorzugten Ausgestaltung der Erfindung umfasst der mehrschichtige Aufbau zwischen der mindestens einen beschichteten Trägerbahn und der mindestens einen Kernlage mindestens eine Lage eines gegebenenfalls mit einem duroplastischen Harz imprägnierten Papiers. Vorzugsweise handelt es sich bei dem duroplastischen Harz um ein Aminoplastharz, vorzugsweise ein Melaminformaldehydharz.

Gemäß einer weiteren Ausgestaltung der Erfindung umfasst der mehrschichtige Aufbau einen Trennfilm mit einer Ultramatt-Beschichtung, der auf der mindestens einen beschichteten Trägerbahn angeordnet ist. Als Ultramatt-Beschichtung eignen sich beispielsweise Polyester-Filme (z.B. PET-Filme) mit einer Acrylatbeschichtung, die mit einem Excimerlaser behandelt wurden und z.B. mit ESH-Technologie vernetzt wurden. Durch diese Maßnahme kann ein Antifingerprint-Effekt auf der Oberfläche erzeugt werden.

Weiter bevorzugt ist ein Verfahren, bei dem der mehrschichtige Aufbau höchstens 5 min, vorzugsweise höchstens 2 min und weiter bevorzugt höchstens 60 s und insbesondere zwischen 5 s und 45 s, noch mehr bevorzugt zwischen 5 s und 30 s, verpresst wird, um die erste Beschichtungsmasse (PTC-Lack) und die integrierten duroplastischen Harze, sowie die zweite polymerisierbare Beschichtungsmasse (PTX-Lackschicht) vollständig zu vernetzen (vollständig auszuhärten). Gemäß einem derartigen Verfahren kann die Verpressung in einer Kurztaktpresse durch ein sogenanntes Kurztaktpressverfahren bei einer Temperatur von größer als 110 °C und einem Druck von mehr als 5 bar, insbesondere mehr als 20 bar, innerhalb eines Zeitraumes von weniger als 60 s, bevorzugt weniger als 45 s, noch mehr bevorzugt weniger als 30 s, erfolgen. Als Vorteil ergibt sich höchste Flexibilität bezüglich des Pressvorgangs.

So ist das Verfahren mit Kurztaktpressen-, Doppelbandpressen- und Mehretagepressentechnologie kompatibel.

Falls eine Mehretagepressentechnologie angewendet wird, wird der Aufbau vorzugsweise höchstens 60 min und weiter bevorzugt höchstens 45 min und insbesondere zwischen 25 und 40 min bei üblicherweise von 60 bis 90 bar Flächendruck und einer Reaktionstemperatur von 140°C bis 170 °C verpresst.

Weiterhin ermöglicht die vorliegende Erfindung das Beschichten von Druck- und/oder Temperatur-empfindlichen Kernlagen wie MDF- und Spanplatten, so dass sich die vorliegende Erfindung für unterschiedlichste Kernlagen eignet. Demnach ist die Kernlage gemäß einer weiteren Ausgestaltung der Erfindung ausgewählt unter HDF-Platten, MDF-Platten, Spanplatten, Kunststoffplatten, Kunststoff-Holzgemischen (WPC-Platten), Papierlagen oder Schichtstofflagen. Die Kernlage kann auch erst während der Verpressung entstehen.

Auch andere, plattenförmigen Grundwerkstoffe, sind möglich. Ebenfalls kann das Werkstück aus mehreren Schichten von mit Harz getränkten Papieren bestehen (sogenanntes dekoratives Laminat).

Ein derartig zügiges Vernetzen (Aushärten) bei dem erfindungsgemäßen Verfahren kann insbesondere dadurch erreicht werden, dass der ersten flüssigen Beschichtungsmasse (PTC-Schicht) ein Initiator zugesetzt wird, der zu einem Aushärten selbst während eines kurzzeitigen Verpressens führt. Es ist nicht zwingend notwendig, dass auch in der zweiten polymerisierbaren Beschichtungsschicht (PTX-Lack) ein Initiator vorhanden ist. Ein Initiator kann jedoch optional vorhanden sein. Falls auch in der zweiten polymerisierbaren Beschichtungsschicht (PTX-Schicht) ein Initiator vorhanden ist, treffen die folgenden Ausführungen auch auf diesen zu.

Entsprechend der Erfordernisses des Vernetzens (Aushärtens) selbst während eines kurzzeitigen Verpressens enthält die erste Beschichtungsmasse gemäß einer weiteren bevorzugten Ausführungsform einen Initiator, der eine Zerfallstemperatur aufweist, so dass während der Verpressung die vollständige Vernetzung (vollständige Aushärtung) der Beschichtungsmasse innerhalb von höchstens 5 min, vorzugsweise höchstens 2 min und weiter bevorzugt höchstens 60 s und insbesondere zwischen 5 s und 45 s, weiter bevorzugt insbesondere zwischen 5 s und 30 s, erfolgt. Weiter ist es bevorzugt, dass während der Verpressung eine vollständige Vernetzung der ersten Beschichtungsschicht erfolgt. Geeignete Initiatoren weisen beispielsweise eine Zerfallstemperatur, bezogen auf eine Halbwertszeit von 10 min, von 80 bis 145°C, vorzugsweise von 125 bis 140°C, weiter bevorzugt von 130 bis 135°C und insbesondere 132 ± 2°C auf. Weitere geeignete Initiatoren weisen beispielsweise eine Zerfallstemperatur, bezogen auf eine Halbwertszeit von 10 min, von 80 bis 145°C, vorzugsweise von 110 bis 140°C, und insbesondere 132 ± 2°C, 126 ± 2°C und 111 ± 2°C auf. Spezifische Initiatoren sind ausgewählt aus der Gruppe der organischen Peroxide und Azoinitiatoren, Bevorzugte Initiatoren sind Peroxide der Gruppe bestehend aus Alkylperoxiden, Peroxyestern, Hydroperoxiden, Acylperoxiden, Peroxycarbonaten und Peroxyketalen, insbesondere Peroxyketalen. Ein besonders bevorzugter unter den Peroxyketalen ausgewählter Initiator ist ein Cycloalkanderivat, vorzugsweise ein Cyclohexanderivat und insbesondere 1,1-Di-(*tert*-Butylperoxy)cyclohexan, 1,1-Di-(*tert*-butylperoxy)-3,3,5-trimethylcyclohexan und *tert-*Butyl peroxy-2-ethylhexanoat.

Die folgenden Ausführungen treffen sowohl auf die erste als auch auf die zweite Beschichtungsschicht zu. Beide Schichten, die PTC-Schicht (2) als auch die zweite PTX-Schicht (2a/2b), können sowohl eine Polyurethanacrylat-Schicht als auch ein Acryllack sein.

Gemäß einer weiteren bevorzugten Ausgestaltung der Erfindung basiert die Beschichtungsmasse auf einem Polyurethanacrylat-Harzsystem. Das Polyurethanacrylat-Harzsystem kann sich aus einer Harzkomponente und einer Härterkomponente zusammensetzen. Die Härterkomponente kann aus einem mehrfach funktionellen, mindestens difunktionellen Isocyanat bestehen. Vorteilhafterweise liegen die Harz- und die Härterkomponente in stöchiometrischen Mengenverhältnissen vor.

In einer besonders bevorzugten Ausgestaltung der Erfindung ist die Harzkomponente der flüssigen polymerisierbaren Beschichtungsschicht ein aliphatisches Urethan-Acrylat Oligomer und/oder eine polymerisierbare Acrylatverbindung mit freien Hydroxylgruppen. Die Härterkomponente ist vorzugsweise aliphatisches Urethan-Gemisch, vorzugsweise Hexamethylendiisocyanat-Oligomere.

Die Beschichtungsmasse kann darüber hinaus Lösemittel oder Reaktivverdünner, sowie weitere Additive wie Lichtschutzmittel, Füllstoffe zur Verbesserung der Mikrokratzfestigkeit, Farbpigmente, Flammschutzmittel, Lichtschutzmittel wie UV-Absorber oder Radikalfänger und/oder Zusatzstoffe zur Anpassung der hydro- und oleophoben Eigenschaften aufweisen. Weitere Additive können Inhibitoren zur Vermeidung der vorzeitigen Vernetzungsreaktion sein.

In einer bevorzugten Ausführungsform setzt sich die erste flüssige Beschichtungsmasse (a) (erste flüssige Beschichtungsschicht) wie folgt zusammen.

Erste flüssige Beschichtungsmasse (PTC-Schicht):
- 0.01 - 5, vorzugsweise 0.05 - 2 und insbesondere 0.1 bis 1 Gewichtsteile Initiator;
- 30 - 90, vorzugsweise 40 - 80 und insbesondere 50 - 70 Gewichtsteile Harzkomponente;
- 5 - 40, vorzugsweise 10 - 35 und insbesondere 15 - 30 Gewichtsteile Härterkomponente;
- ggfs. 5 - 40, vorzugsweise 10 - 30 und insbesondere 15 bis 25 Gewichtsteile Lösemittel oder Reaktivverdünner; und
- ggfs. 1 - 10, vorzugsweise 1 - 7 und insbesondere 2 - 5 Gewichtsteile zusätzlicher Additive.

Erste flüssige Beschichtungsmasse (Beispiel 1):
- 61 Gewichtsteile aliphatisches Urethan-Acrylat Oligomer;
- 17 Gewichtsteile Lösemittel;
- 18 Gewichtsteile aliphatisches Urethan-Gemisch, vorzugsweise Hexamethylendiisocyanat-Oligomere; und
- 4 Gewichtsteile optionaler Additive, vorzugsweise Katalysatoren, Initiatoren für thermische Vernetzung, Lichtschutzmittel, Füllstoffe zur Verbesserung der Mikrokratzfestigkeit, Zusatzstoffe zur Anpassung der hydro- und oleophoben Eigenschaften.

Erste flüssige Beschichtungsmasse (Beispiel 2):
- 48 Gewichtsanteile polymerisierbarer Acrylatverbindungen mit freien Hydroxylgruppen;
- 27 Gewichtsanteile aliphatisches Urethan-Gemisch, vorzugsweise Hexamethylendiisocyanat-Oligomer;
- 19 Gewichtsanteile Lösemittel; und
- 6 Gewichtsteile optionaler Additive, vorzugsweise Katalysatoren, Initiatoren für thermische Vernetzung, Lichtschutzmittel, Füllstoffe zur Verbesserung der Mikrokratzfestigkeit, Zusatzstoffe zur Anpassung der hydro- und oleophoben Eigenschaften.
- Erste flüssige Beschichtungsmasse (Beispiel 3):
- 46 Gewichtsanteile polymerisierbarer Acrylatverbindungen mit freien Hydroxylgruppen;
- 33 Gewichtsanteile aliphatisches Urethan-Gemisch, vorzugsweise Hexamethylendiisocyanat-Oligomer;
- 15 Gewichtsanteile Reaktivverdünner, vorzugsweise Dipropylenglycoldiacrylat (DPGDA); und
- 6 Gewichtsteile optionaler Additive, vorzugsweise Katalysatoren, Initiatoren für thermische Vernetzung, Lichtschutzmittel, Füllstoffe zur Verbesserung der Mikrokratzfestigkeit, Zusatzstoffe zur Anpassung der hydro- und oleophoben Eigenschaften.

Bei der Durchführung des erfindungsgemäßen Herstellungsverfahrens kann es sein, dass sich z.B. nach der Verpressung ein Acrylat, sichtbar in Form eines braunen Niederschlags, auf dem Pressblech niederschlagen kann. Dieser Niederschlag kann beispielsweise durch das unzureichende Trennvermögen von dem auszuhärtenden Acrylatlack und dem Pressblech zustande kommen. Bisher konnten, um einen derartigen Niederschlag zu vermeiden, maximal 3-4 Presszyklen gefahren werden. Es wurde nun im Rahmen der vorliegenden Erfindung gefunden, dass der zweiten Beschichtungsschicht (PTX-Schicht) ein Tensid, bevorzugt ein Silikontensid, hinzugefügt werden muss, um die Trenneigenschaften der zweiten Beschichtungsmasse zu erhöhen und dadurch einen derartigen Niederschlag zu verhindern.

Diese Silikontenside weisen bevorzugt freie Acrylatgruppen auf. Diese haben den Vorteil, dass sie während des Pressvorgangs in das Acrylat-Bett mit eingebaut werden und so eine Migration der Tenside zur Grenzfläche unterbunden wird. So wird auch gleichzeitig die Gefahr eines ungewollten Niederschlags auf das Pressblech ausgeräumt.

In einer bevorzugten Ausführungsform setzt sich die zweite flüssige polymerisierbare Beschichtungsmasse daher wie folgt zusammen:
Zweite flüssige, polymerisierbare Beschichtungsmasse auf der Basis von Acryllack (PTX-Schicht/PTX-Lack 2a) (Beispiel 4)
- 60 Gewichtsanteile einer polymerisierbarer, niedrig-viskosen Urethan-Acrylatverbindungen mit freien Acrylatgruppen;
- 20 Gewichtsanteile eines trifunktionellen Acrylates, vorzugsweise Trimethylolpropantriacrylat (TMPTA), wahlweise auch Trimethylolpropanmethacrylat (TMPTMA)
- 15 Gewichtsanteile eines difunktionellen Acrylates, vorzugsweise Dipropylenglycoldiacrylat (DPGDA);
- 3 Gewichtsanteile eines Silikontensids mit freien Acrylatgruppen, vorzugsweise ein Silikondiacrylat oder Silikonhexaacrylat und
- 2 Gewichtsteile optionaler Additive, vorzugsweise Katalysatoren, Initiatoren für thermische Vernetzung, Lichtschutzmittel, Füllstoffe zur Verbesserung der Mikrokratzfestigkeit, Zusatzstoffe zur Anpassung der hydro- und oleophoben Eigenschaften.

Zweite flüssige, polymerisierbare Beschichtungsmasse 2a (Beispiel 5):
- 55 Gewichtsanteile einer polymerisierbarer, hoch-viskosen Urethan-Acrylatverbindungen mit freien Acrylatgruppen;
- 20 Gewichtsanteile eines difunktionellen Acrylates, vorzugsweise Tripropylenglycoldiacrylat (TPGDA);
- 18 Gewichtsanteile eines difunktionellen Acrylates, vorzugsweise (2-Phenoxyethylacrylat) (PHEA);
- 4 Gewichtsanteile eines silikonhaltiges Oberflächenadditiv, insbesondere ein polyethermodifiziertes Polydimethylsiloxan und
- 3 Gewichtsteile optionaler weiterer Additive, vorzugsweise Katalysatoren, Initiatoren für thermische Vernetzung, Lichtschutzmittel, Füllstoffe zur Verbesserung der Mikrokratzfestigkeit, Zusatzstoffe zur Anpassung der hydro- und oleophoben Eigenschaften.

Zweite flüssige, polymerisierbare Beschichtungsmasse (2b) auf der Basis von Polyurethanacrylat (Beispiel 6):
- 50 Gewichtsanteile polymerisierbarer Acrylatverbindungen mit freien Hydroxylgruppen;
- 30 Gewichtsanteile aliphatisches Urethan-Gemisch, vorzugsweise Hexamethylendiisocyanat-Oligomer;
- 15 Gewichtsanteile mono- und difunktionelle Reaktivverdünner, vorzugsweise Dipropylenglycoldiacrylat (DPGDA); und
- 5 Gewichtsteile optionaler Additive, vorzugsweise Katalysatoren, Initiatoren für Strahlenhärtung und thermische Vernetzung, Lichtschutzmittel, Füllstoffe zur Verbesserung der Mikrokratzfestigkeit, Zusatzstoffe zur Anpassung der hydro- und oleophoben Eigenschaften.

Die flüssige Beschichtungsmasse (PTC-Schicht und PTX-Schicht) wie hierein verwendet kann vorteilhafterweise durch entsprechende Modifikation unterschiedliche Anforderungen erfüllen. So kann auf Grundlage der gewünschten Verpressungsbedingungen ein geeigneter Initiator ausgewählt werden. Außerdem lassen sich bestimmte Eigenschaften, wie Härte und Haptik durch Variieren des Elastomeranteils (Polyurethan) und des Duromeranteils (Acrylat) in bestimmten Grenzen anpassen. Beispielsweise kann eine haptisch freundlichere Oberfläche erzeugt werden, wenn die polymerisierbare Beschichtungsmasse einen gesteigerten Urethananteil umfasst oder durch Zugabe von Silikontensides, insbesondere eines Silikonhexaacrylat, beispielweise Ebecryl 1360 der Firma Allnex.

Kennzeichnend für die Beschichtungsmasse 2a und 2b ist der Erhalt der Mikrostruktur nach dem Heißpressvorgang, insbesondere ein Verfahren mit Kurztaktpressen-, Doppelbandpressen- und Mehretagenpressentechnologie. Die Beschichtungsmasse 2a und 2b unterscheiden sich im Wesentlichen, dass 2a ein Einkomponenten- und 2b ein Zweikomponentensystem ist. Die erfindungsgemäße Beschichtungsmasse 2a ist auf der Basis eines Acryllackes gemäß den Beispielen 4 und 5. Die erfindungsgemäße, polymerisierbare Beschichtungsmasse 2b basiert Polyurethanacrylat-Harzsystem gemäß dem Beispiel 6.

In einer weiteren Ausgestaltung der Erfindung dient ein nicht-gefülltes Papier als zu beschichtende Trägerbahn. Dies hat den Vorteil, dass die Trägerbahn nach dem Verpressen transparent und ein darunter optional aufgebrachtes Dekor sichtbar wird.

Des Weiteren kann die die zu beschichtende Trägerbahn frei von einem Aminoplastharz sein. Das heißt, die zu beschichtende Trägerbahn ist nicht mit einem Aminoplastharz imprägniert. Alternativ hierzu ist die zu beschichtende Trägerbahn mit einem Aminoplast- oder Polyurethanharz imprägniert. Die Imprägnierung gewährleistet, dass die Trägerbahn spaltfest ist. Vorzugsweise beträgt das Flächengewicht des Aminoplastharzes nach der Trocknung 20 bis 300 g/qm, bevorzugt 45 bis 180 g/qm beträgt und die Volatilität weniger als 9 Gewichts-%, bevorzugt 7 - 8 Gewichts-% oder weniger.

Ferner kann die flüssige Beschichtungsmasse 2a und 2b einen oder mehrere nanoskalige Füllstoffe aufweisen, insbesondere eine Dispersion von kolloidalen siliziumoxid- und/oder aluminiumoxidbasierten Nanopartikeln. Durch Verwendung derartiger nanoskalige Füllstoffe kann ein plattenförmiges Werkstück hergestellt werden, das eine Kratzfestigkeit von mindestens 4N in Verbindungen mit einer Mikrokratzfestigkeit von mindestens Grad 4 gemäß DIN EN 438 aufweist.

Bevorzugt ist weiterhin ein Verfahren, bei dem die Kernlage erst während der Verpressung in Schritt (F) zu einem festen, plattenförmigen Werkstück wird.

Des Weiteren ist ein Verfahren bevorzugt, bei dem die zu beschichtende Trägerbahn und/oder das ggfs. mit einem duroplastischen Harz imprägnierte Papier dekorativ vorbedruckt ist. Vorzugsweise erfolgt die Vorbedruckung mittels einer digitalen Druckmaschine.

Die Aufgabe wird außerdem gelöst durch eine polymerisierbare Beschichtungsmasse auf Basis eines Polyurethanacrylat-Harzsystems mit einem Initiator, der eine Zerfallstemperatur aufweist, so dass während der Verpressung die vollständige Aushärtung der polymerisierbare Beschichtungsmasse innerhalb von höchstens 5 min, vorzugsweise höchstens 2 min und weiter bevorzugt höchstens 60 s und insbesondere zwischen 5 s und 45 s, besonders zwischen 5 s und 30 s, erfolgt und/oder während der Verpressung eine vollständige Vernetzung der Beschichtung erfolgt. Vorzugsweise ist die polymerisierbare Beschichtungsmasse beschaffen wie hier (insbesondere im Zusammenhang mit dem erfindungsgemäßen Verfahren) beschrieben.

Ferner ist hierin eine beschichtete Trägerbahn beschrieben, hergestellt oder herstellbar durch das erfindungsgemäße Verfahren.

Schließlich ist hierin ebenfalls ein plattenförmiges Werkstück mit mattierter Oberfläche offenbart, umfassend (a), (b), (c), und (d1) oder (d2):
(a) ist eine Kernlage (3),
(b) ist eine Trägerbahn (1), die ein dreidimensionales Muster aufweist und die sich auf der Kernlage (3) befindet,
(c) ist eine Polyurethanacrylat-Harz-Polymerschicht (2) die sich auf der Trägerbahn (1) befindet, wobei die Polymerisierung bei einer Temperatur von größer als 110 °C und einem Druck von mehr als 5 bar, insbesondere mehr als 20 bar, erfolgt ist,
(d1) ist eine weitere Acryllack-Polymerschicht (2a) auf der Polymerschicht (2), die durch Bestrahlung mit UV-Strahlung von weniger als 400 nm Wellenlänge, und einem Pressvorgang wie hierin beschrieben, vernetzt (ausgehärtet) worden ist, und
(d2) ist eine weitere Polyurethanacrylat-Harzschicht (2b) auf der Polymerschicht (2), die durch Bestrahlung mit UV-Strahlung von weniger als 400 nm Wellenlänge, und einem Pressvorgang wie hierin beschrieben, vernetzt (ausgehärtet) worden ist.

Bei dem plattenförmigen Werkstück handelt es sich insbesondere um eine Möbeloberflächen, ein Fußbodenpaneel, Wand- oder Deckenpaneel.

Die Werkstücke, oder die beschichteten Trägerbahnen, die gemäß dem hier beschriebenen Verfahren hergestellt werden, sind von Werkstücken, die durch andere Verfahren hergestellt wurden, unterscheidbar, und zwar zum einen strukturell, was optisch dargestellt werden kann, und zum anderen auch durch andere Eigenschaften. Beispielsweise ist die Vernetzung, welche auch durch den Schritt des Verpressens erreicht wird, engmaschiger als bei Werkstücken, die durch ein bereits bekanntes Verfahren hergestellt wurden. Dieses engmaschigere Netzwerk führt zu verbesserten Eigenschaften des Werkstücks, beispielsweise in Bezug auf Kratzfestigkeit oder Verformbarkeit.

Alternativ oder zusätzlich zu der hierein definierten Kratzfestigkeit und Mikrokratzfestigkeit weisen die Werkstücke, die mit dem hier beschriebenen Verfahren hergestellt wurden, einen Glanzgrad zwischen 1,0 bis 3,5, bevorzugt zwischen 1,3 bis 2,8, mehr bevorzugt zwischen 1,5 bis 2,5 Glanzeinheiten (GE), gemessen bei einem Reflexionswinkel von 60 Grad, auf; und einen Glanzgrad zwischen 5 und 26, bevorzugt zwischen 7 und 25, mehr bevorzugt zwischen 9 und 23.5 GE, gemessen bei einem Reflexionswinkel von 85 Grad. Der Glanzgrad wird nach dem Standard ASTM D 523 bei einem Reflexionswinkel von 60 Grad und 85 Grad jeweils in und quer zur Laufrichtung mit einem Dreier-Mittelwert bei Umgebungsbedingungen (20-25°C, bevorzugt 20°C; relative Luftfeuchtigkeit 40-60%, bevorzugt 40%), mit dem Prüfgerät micro-TRI-gloss Dreiwinkel-Glanzmesser der Firma BYK-Gardner GmbH gemessen.

Zusammenfassend ermöglicht die hier offenbarte Erfindung, einen bevorzugt transparenten, dekorneutralen Film, insbesondere mit einer tiefmatten Oberfläche, vorzugsweise auf Basis eines melaminharzimprägnierten Overlayfilms mit einem vorteilhaften Eigenschaftsprofil bereitzustellen, welcher in herkömmlichen Verfahren und unter Nutzung bestehender (und unterschiedlicher) Pressen-Technologie flexibel verwendet werden kann. Die Erfindung eignet sich sowohl für die Anwendung im Möbelbereich, vorzugsweise für die Beschichtung von Kernlagen aus Spanplatten, MDF-Platten und HDF-Platten, als auch für die Herstellung von Fußböden auf HDF-Kernlagen, Kunststoffplatten, Kunststoff-Holzgemischen (WPC-Platten) oder gefüllten Kunststoffplatten. Insbesondere zu erwähnen ist die Tatsache, dass die Erfindung unabhängig von der Art der verwendeten Kernlage anwendbar ist, solange diese in einem Pressverfahren dem Druck- und Temperaturbereich des erfindungsgemäßen Verfahrens standhält, oder aus den verwendeten Materialien während des Pressverfahrens entsteht.

Da in einer bevorzugten Ausführungsform der Film transparent ist, enthalten weder die erst noch die zweite flüssige polymerisierbare Beschichtungsmasse Farbpigmente.

Nachfolgend wird die Erfindung im Detail anhand der beigefügten Figuren näher erläutert. Sie zeigen:
Nachfolgend beziehen sich die Figuren 1 und 2 auf Ausführungsformen ohne der zweiten flüssigen, polymerisierbaren Beschichtungsmasse auf Acryllack-Basis. Die Figuren 3 bis 5 beziehen sich auf Ausführungsformen mit der zweiten flüssigen, polymerisierbaren Beschichtungsmasse.

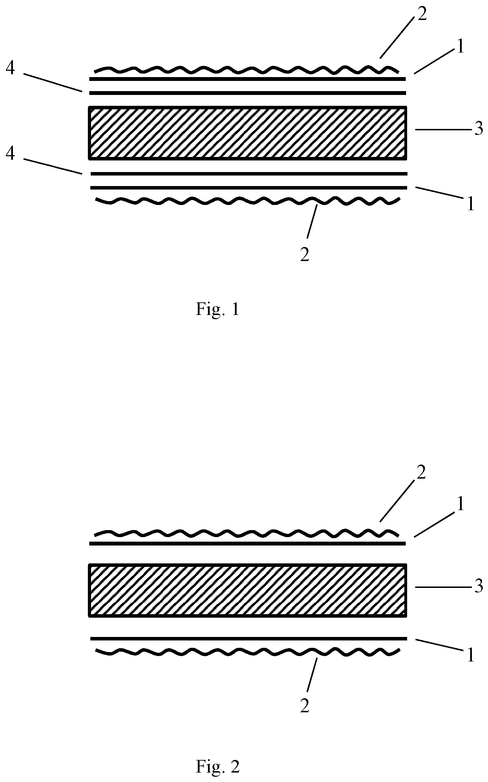

Fig. 1 stellt einen Aufbau eines nach dem hierin beschriebenen Verfahren hergestellten Produktes dar, bei dem eine Trägerbahn 1 mit einer ersten flüssigen Beschichtungsmasse 2 beschichtet wurde, die anschließend mit einem Kernaufbau, der aus einer Kernlage 3, z.B. einer Spanplatte, HDF-Platte, MDF-Platte, sonstiger Baustoffplatte und einer dazwischenliegenden weiteren Papierlage 4, die mit einem duroplastischen Harz imprägniert wurde, zu einem festen Produkt verpresst wurde, welches die oben genannten positiven Eigenschaften aufweist.

Fig. 2 stellt ein alternatives Produkt dar, welches ebenfalls mit dem hierein beschriebenen Verfahren hergestellt ist, mit einem Aufbau eines bahnförmigen Trägermaterials 1, das zuvor imprägniert wurde, vorzugsweise mit Melaminformaldehydharz, welches ebenfalls mit der ersten flüssigen Beschichtungsmasse 2 beschichtet wurde und ohne Zwischenlage eines weiteren Papiers direkt auf die Kernlage 3 aufgebracht wurde und mit dieser anschließend nach dem erfindungsgemäßen Verfahren verpresst wurde.

In beiden Figuren ist die beschriebene Beschichtungsmasse 2 nach dem erfindungsgemäßen Verfahren nach einem der hier beschriebenen Basisgemischvarianten hergestellt.

Figur 3 zeigt das erfindungsgemäße Verfahren. Hier wird ein bedrucktes und mit Melaminharz oder mit einem Melaminharzgemisch imprägniertes Dekorpapier oder unifarbenes Dekorpapier 2.1 in einer Auftragseinheit 1.1 abgewickelt und mit einer flüssigen Beschichtungsschicht 2 beschichtet. Diese wird in der Lackvorlage 2.2 aufgebracht und liegt als Schicht 2 auf der Trägerbahn 2.1. Anschließend wird die so beschichtete Trägerbahn durch einen Trockner 1.2 auf einem Transportmechanismus 1.3 hindurchgefördert und die flüssige Beschichtung 2 vorgetrocknet. Nun folgt gemäß der Erfindung der zweite Auftrag einer weiteren flüssigen Beschichtungsschicht 2a oder 2b in der Auftragseinheit 7.1. Diese flüssige Beschichtung 2a und 2b wird in der danach folgenden UV-Bestrahlungseinheit 7.2 zumindest in der Oberfläche angetrocknet. Dabei ist die flüssige Beschichtung 2a und 2b derartig ausgestaltet, dass sie bei Bestrahlung mit einer Wellenlänge von weniger als 300 nm, besonders bevorzugt von 172 nm in der Oberfläche aushärtet und dabei eine Mikrofaltung mit einer Strukturtiefe von weniger als 10 µm, oder weniger als 5 µm ausbildet. In einer Ausführungsform bildet sie eine Mikrofaltung von weniger als 10 µm, besonders bevorzugt weniger als 5 µm aus. Nach der UV-Bestrahlung kann optional ein weiterer Bestrahlungsschritt zur weiteren Aushärtung der Beschichtungsmasse (2a) oder (2b) erfolgen. In einer bevorzugten Ausführungsform erfolgt ein derartiger weiterer Bestrahlungsschritt.

Danach wird die so erzeugte Papierfolie einer Schnittstation 6 zugeführt und in Einzelblätter geschnitten, die auf einem Stapelplatz, z.B. auf einem Hubtisch 5, gestapelt werden. Alternativ kann dieser Stapelplatz auch als eine Wiederaufwickelstation ohne Schnittstation ausgeführt sein.

### Figur 4

Das anschließend gebildete Paket aus einer Trägerplatte 3 (Kernlage) mit darauf liegendem, nach dem oben genannten und in Figur 3 dargestellten Verfahren hergestellten Papierfilm mit zweiter flüssiger Beschichtung 2a oder 2b und daruntergelegtem Gegenzug 8 wird in eine Heißpresse 10 gefördert, die unter Druck und Temperatur das gesamte Paket aushärtet.

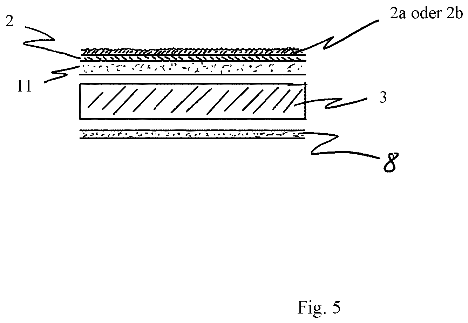

In Figur 5 ist der gesamte beispielhafte Produktaufbau noch einmal dargestellt. Die oberste erfindungsgemäße Schicht 2a oder 2b zeigt die ausgehärtete, durch UV-Strahlung in der Oberfläche mattierte flüssige Beschichtung. Darunter befindet sich eine Papierlage 11, die mit einem Melaminharz oder Melaminharzgemisch oder auch einem anderen Aminoharz oder Aminoharzgemisch imprägnierte Papierbahn, welche vorher dekorativ oder auch unifarben bedruckt oder eingefärbt sein kann, sowie die zuvor auf die Papierbahn aufgetragene flüssige Beschichtung 2. Unter der Papierlage 11 befindet sich eine Trägerplatte 3, beispielsweise eine MDF-, HDF-, Span-, oder Kunststoffplatte. Schließlich zeigt die Figur ein sogenanntes Gegenzugpapier 8, eine Papierbahn, welche vorab mit beispielsweise Melaminharz oder einem anderen Aminoharz oder auch Phenolharzgemisch imprägniert worden ist.

### Ausführungsbeispiel 1: Beschichteter Overlayfilm

Es wird zunächst eine Lackmischung (flüssige polymerisierbare Beschichtung/Beschichtungsmasse) hergestellt, nach einer der weiter oben beschriebenen Methoden.

Diese so erzeugte Lackmischung wird mit einem Walzenauftragsverfahren auf einen imprägnierten Film aufgetragen. Der Film besteht aus einem nicht gefüllten Papier (Overlay-Grammatur unimprägniert, 15 - 40 g/m², vorzugsweise 22 und 25 g/m²) und hat nach der Imprägnierung mit z.B. einem Aminoplastharz ein Gewicht von 45 bis 200 g pro qm, bevorzugt 70 bis 90 g pro qm. Ein mögliches Beispiel für eine solche ungefüllte Papierbahn wird von der Firma Glatfelter unter der Bezeichnung ADO oder NZO vermarktet. Nach dem Auftrag von 20 bis 150 g pro qm der o.g. Lackmischung, bevorzugt 30 bis 120 g pro qm, wird der Film in einem Trocknungsofen mittels beheizter Luft behandelt. Dabei wird der Lösemittelanteil von vorher ca. 20% vollständig entfernt und es wird eine chemische Reaktion angestoßen. Nachfolgend wird der Film auf einen zweiten Film aufgebracht mit einem Flächengewicht von 100 bis 250 g pro qm. Dieser Film ist ein dekorativ bedrucktes (z.B. ein Holzdekor), Druckbasispapier welches vorzugsweise mit einem duroplastischen Harz, z.B. Aminoplastharz imprägniert wurde. Danach werden beide aufeinanderliegenden Papierbahnen auf eine 16 mm dicke Spanplatte aufgebracht. Je nach Endprodukt kann derselbe Aufbau aus zwei Filmen auch auf der Rückseite der Spanplatte aufgebracht werden. Der so gebildete Aufbau wird in einer Heißpresse mit ca. 200 Grad Temperatur und einem Druck von 35 bar für eine Zeit von ca. 20 - 30 sec. verpresst. Um eine möglichst naturgetreue Oberflächenstruktur zu erzielen, können dabei sogenannte strukturierte Pressbleche eingesetzt werden.

### Ausführungsbeispiel 2: Digitaldruck mit wasserbasierter Tinte

Ein gefülltes Dekorpapier mit einem Flächengewicht von ca. 90 g/m², welches mit Titandioxid und einer speziellen Farbempfangsschicht versehen wurde, wird im Digitaldruckverfahren mit einer wasserbasierten Tinte bei einem Auftrag von ca. 10 g/m² wässriger Tinte dekorativ bedruckt. Das so mit einem Holz- oder Steindekor bedruckte Papier wird anschließend mit einem Melaminharz oder Melaminharzmischsystem imprägniert und auf eine Restfeuchte von ca. 6% pro Gewichtsprozent zurückgetrocknet. Anschließend wird eine der oben beschriebenen Lackmischungen in einem Walzenauftragsverfahren auf das so hergestellte und wässrig bedruckte Dekorpapier aufgetragen und in einem Trocknungsofen mittels beheizter Luft bei einer Temperatur von 120°C getrocknet. Das in der Lackbeschichtung enthaltene Lösungsmittel wird dabei vollständig entfernt und eine chemische Reaktion des Bindemittels angestoßen. Dieses so hergestellte Papier wird dann auf eine 18 mm Spanplatte beidseitig aufgebracht und in einer kontinuierlichen Doppelbandpresse mit einer Einlauftemperatur von 190°C und einer Produktionsgeschwindigkeit von 10 m/min. bei einer 3 m langen Presszone verpresst. Das Ergebnis ist eine qualitativ hochwertige Möbeloberfläche mit hoher Kratzfestigkeit durch die hochmatte Oberfläche des zur Verpressung verwendeten verchromten Stahlbandes der Doppelbandpresse.

### Ausführungsbeispiel 3: Schichtstoff mit Antifingerprint-Effekt

Es wird eine gefüllte und dunkelfarbig bedruckte Papierbahn mit einem Papiergewicht von 100 bis 250 g/m², die vorher vorzugsweise mit Melaminformaldehydharz imprägniert wurde, einseitig mit einem Walzenauftragswerk mit 30 - 150 g/m² der Lackmischung beschichtet. Der Film wird in einem Trockenofen behandelt. Dabei verdampft das in der Lackmischung enthaltene Lösungsmittel vollständig. Des Weiteren wird eine chemische Reaktion des enthaltenen Bindemittels angestoßen. Nach der Trocknung wird der Film auf 3 Kernpapierlagen, die vorher mit Phenolformaldehydharz imprägniert wurden, aufgebracht. Über dem lackierten Dekorfilm wird ein spezieller Trennfilm mit einer Ultramatt-Beschichtung, z.B. von der Fa. Surteco, Typ P850, aufgelegt. Dabei wird die beschichtete Seite des Trennfilms zum unten liegenden Dekorfilm positioniert. Dieser Aufbau wurde mit einer Presskraft von ca. 80 bar und 140° C Heizplattentemperatur ca. 10 Minuten lang in einer Einetagenpresse verpresst. Nach der Verpressung wurde der oben aufliegende Trennfilm unmittelbar entfernt. Das Laminat hat eine geringe Reflexion mit einem Glanzgrad von ca. 2 Punkten bei 60° Messwinkel und zeigte trotz des dunklen Dekors keine sichtbaren Fingerabdrücke nach Berührung und hat angenehme haptische Eigenschaften.

Weiterhin umfasst das Eigenschaftsprofil gute Postforming-Fähigkeiten ohne ein Auftreten von lokaler Delamination oder ähnlichen Oberflächenstörungen. Die gute Adhäsion der Beschichtung (2) mit den unterliegen Kernpapierlagen (3) widersteht einer mechanischen Beanspruchung von mindestens 35 N im Hamberger Hobel Test.

### Ausführungsbeispiel 4: Digitaldruck mit UV-Tinte auf M-JET-Papier

Die Lackmischung wird z.B. mit einem Walzenauftragsverfahren, bevorzugt einem Drei-Walzen-Auftragsverfahren, auf einen imprägnierten Overlay-Film aufgetragen. Der Film besteht aus einem nicht gefüllten Papier (Overlay-Grammatur unimprägniert, 15 - 40 g/m², vorzugsweise 22 und 25 g/m²) und hat nach der Imprägnierung mit z.B. einem Aminoplastharz ein Gewicht von 45 bis 200 g pro qm, bevorzugt 70 bis 90 g pro qm. Nach dem Auftrag von 20 bis 150 g pro qm der o.g. Lackmischung, bevorzugt 30 bis 120 g pro qm, wird der Film in einem Trocknungsofen mittels beheizter Luft behandelt. Dabei wird der Lösemittelanteil von vorher ca. 20% vollständig entfernt und es wird eine chemische Reaktion angestoßen.

Des Weiteren wird eine Papierbahn mit einem Papiergewicht von 45 g/m² ohne Titandioxidfüllstoffen mit einer UV-härtenden Tinte, welche im Wesentlichen Komponenten (Acrylate, Dispergieradditive und Farbpigmente) enthält, dekorativ bedruckt. Dabei wird eine Tintenmenge von ca. 1 - 10 g/m², bevorzugt 2,5 - 6 g/m2 für alle 4 Farben (CMYK) verwendet. Anschließend wird dieses so bedruckte Papier mit einer UV-Strahlung mit einer Strahlendosis von 250 mJ/cm² getrocknet. Anschließend wird ein Stapel aus einer HDF-Platte mit 12 mm Stärke, einem darauf liegenden weißen imprägnierten Underlayfilm, wobei dieser weiße Underlayfilm, z.B. mit einem Aminoplastharzgemisch imprägniert wurde, zusammengestellt. Der Stapel besteht aus der HDF-Platte (12 mm), dem weißen Film und der darauf liegenden - wie oben beschrieben - mit UV-Tinte digitalbedruckten Papierbahn und dem mit der Lackmischung beschichteten Overlayfilm. Auf der Unterseite des so hergestellten Stapels wird ein eingefärbtes Papier, mit einer Aminoplastharzmischung imprägniert, aufgebracht, bevorzugt mit einer Phenolharzmischung, in einer alternativen Ausführungsform einer Phenolharzmelamin- oder reinen Melaminharzmischung. Der so gebildete Stapel wird unter einem Druck von 50 bar pro m² bei einer Temperatur von 200 °C in einer Kurztaktpresse für 30 Sekunden verpresst. Das sich dann ergebende Produkt ist ein Laminatfußboden mit einer sehr warm gefühlten Oberfläche (lackartige Oberfläche) und einer hohen Kratzfestigkeit.

Gemäß einer modifizierten Ausgestaltung des oben beschriebenen Ausführungsbeispiels wird das digital bedruckte M-Jet-Papier mit dem Lack beschichtet, dadurch entfällt die Verwendung eines Overlayfilms bei der Verpressung.

### Ausführungsbeispiel 5: Bedrucktes und gefülltes Basispapier auf Spanplatte

Ausgangspunkt für das hier dargestellte Ausführungsbeispiel ist ebenfalls eine Lackmischung, die nach einem der weiter oben beschriebenen Basisgemischen hergestellt wird. Diese Lackmischung wird mit einem Auftragsverfahren im kontinuierlichen Rakelverfahren auf eine hochgefüllte und bedruckte Dekorfilmbahn, welche ein Gewicht zwischen 100 und 250 g/m² hat und vor dem Auftrag der Lackmischung bereits vorzugsweise mit einem Aminoplastharz imprägniert war, aufgetragen. Anschließend wird der Film mit der so aufgetragenen Lackmischung in einem Trocknungsofen unter Verwendung von beheizter Luft und/oder mittels IR-Strahlern behandelt. Der Lösemittelanteil der Lackmischung wird von vorher ca. 20 % vollständig entfernt und es wird eine chemische Reaktion angestoßen.

Anschließend wird der so erzeugte und getrocknete Film auf eine Oberfläche einer Rohspanplatte aufgebracht. In einem alternativen Ausführungsbeispiel wird von beiden Seiten der Rohspanplatte ein solcher so erzeugter Film aufgebracht. Der Stapel aus Spanplatte und beidseitig aufgebrachten Filmen wird einer Kurztaktpresse zugeführt, in der mit einem Flächendruck von 30 bar und einer Presstemperatur von 195 °C und einer Presszeit von 25 Sekunden ein entsprechendes Werkstück erzeugt wird. In einem alternativen Ausführungsbeispiel wird dabei ein Pressblech mit einer 20 - 100 µm tiefen Struktur verwendet, welche ihre Struktur und den Glanzgrad in die Oberfläche des so erzeugten Aufbaus überträgt. Nach Öffnen der Presse und Ausfördern des hergestellten Produktes ist die geprägte Struktur in der hochkratzfesten und haptisch gut anmutenden Oberfläche wiedergegeben.

### Ausführungsbeispiel 6: Beschichteter digitalbedruckter Laminatfußboden

Zunächst wird ein plattenförmiger Basiswerkstoff hergestellt, in dem eine HDF-Platte mit 10 mm Stärke (in einer alternativen Ausführungsform eine Kunststoffplatte mit oder ohne Holzanteil) mit einer weißen flüssigen Beschichtung versehen wird. Diese weiße flüssige Beschichtung besteht aus einem wässrigen Lacksystem, welches im Trocknungsofen unter 120 °C Temperatur zurückgetrocknet wird. In einer alternativen Ausführungsform kann die weiße Oberfläche auch aus einem aufgeklebten, mit Titandioxid gefüllten Papier bestehen. Der so hergestellte weiße Basiswerkstoff (Basisplatte) wird einer digitalen Druckstation zugeführt, bei der mit Hilfe eines sogenannten Single-Pass-Druckers ein Dekorbild im Durchlauf direkt auf die Platte gedruckt wird. Danach wird ein Lackgemisch nach einer der beschriebenen Basisgemische mittels Walzenauftragsverfahren auf die bedruckte Plattenoberfläche aufgebracht. Der Lösemittelanteil des so aufgebrachten Lacksystems wird in einem Trocknungsofen vollständig entfernt und eine chemische Reaktion wird angestoßen. Bei einer alternativen Nutzung des Basisgemisches gemäß Beispiel Nr. 3 wird kein leichtflüchtiges Lösemittel freigesetzt, sondern der enthaltene Reaktivverdünner verbleibt in der Beschichtungsmasse, welche in dem Trocknungsofen vorvernetzt wird. Anschließend wird die so hergestellte Platte in einer kontinuierlichen Doppelbandpresse mit einer Temperatur von 195 °C und einer Vorschubgeschwindigkeit von 12 m/min. bei einer 4 m Presszone verpresst. Das Ergebnis ist ein lackartig anmutender Laminatfußboden mit der gewünschten geprägten Struktur durch das verchromte Stahlband, welches in der Doppelbandpresse verwendet wurde. In einer alternativen Ausführungsform kann als Presse auch eine Kurztaktpresse mit einer Presszeit von 20 Sekunden eingesetzt werden.

### Ausführungsbeispiel 7: Antifinger-Print mit Excimer (erfindungsgemäßes Verfahren)

Es wird eine Papierbahn, z.B. ein Dekorpapier der Firma Technocell mit einem Rohgewicht von 80 g/m² zunächst mit einer Eichenholzdekornachbildung im Tiefdruckverfahren bedruckt. Dieses so bedruckte Papier wird anschließend in einem Imprägnierkanal mit einer Melaminharzmischung imprägniert und vorgetrocknet. Das so erhaltene imprägnierte Papier wird nach dem erfindungsgemäßen Verfahren zunächst mit einer ersten flüssigen Beschichtung (2) wie weiter oben beschrieben beschichtet. Diese so beschichtete Papierbahn wird einem kombinierten Düsentrockner mit IR-Strahlung zugeführt, in dem mit Heißluft mit einer Temperatur von 95 °C sowie IR-Strahlern die flüssige Beschichtung (2) angetrocknet wird.

Anschließend wird der so vorbeschichtete Papierfilm einer Auftragsstation 7.1 zugeführt, bei der eine zweite flüssige polymerisierbare Beschichtungsschicht von 20 g/m² in einem Walzenauftragsverfahren auf den so vorbehandelten Papierfilm aufgetragen wird. Diese zweite flüssige polymerisierbare Beschichtung (2a) besteht aus einem Urethan-Acrylatgemisch mit jeweils freien Acrylatgruppen mit einem Anteil vonweniger als 2.0 Gewichtsprozent Photoinitiatoren vorzugsweise höchstens 3.0 Gewichtsprozent, insbesondere zwischen 0.25 bis 1.0 Gewichtsprozent eines Gemisches aus Photoinitiatoren zur UV-Härtung der Gruppe von Bisacylphosphinoxide (Typ 1) und alpha-Hydroxyalkylphenone (Typ 1) wie vorzugsweise dem 2-Hydroxy-2-methyl-1-phenylpropanon. Zudem finden niedrig-viskose di- oder multifunktionelle Reaktivverdünner Einsatz, vorzugsweise Trimethylolpropantriacrylat (TMPTA), wahlweise auch Trimethylolpropanmethacrylat (TMPTMA) und/oder Dipropylenglycoldiacrylat (DPGDA).

Je nach Anwendungsfenster bestimmen optional zugesetzte Additive das Eigenschaftsprofil der zweiten Beschichtungsmasse. Das Additivgemisch kann Tenside, Katalysatoren, Initiatoren für thermische Vernetzung, Lichtschutzmittel, Füllstoffe zur Verbesserung der Mikrokratzfestigkeit, Zusatzstoffe zur Anpassung der hydro- und oleophoben Eigenschaften enthalten.

In einer alternativen Ausführungsform kann die aufgetragene Schichtstärke auch zwischen 10 g/m² und 50 g/m² variiert werden.

In einem weiteren alternativen Ausführungsverfahren wird die zweite flüssige polymerisierbare Beschichtung (2a) nicht über ein Walzenauftragsverfahren, sondern über ein Gießverfahren aufgetragen.

Die so beschichtete Papierbahn mit der angetrockneten ersten flüssigen Beschichtung (2) und der noch nicht getrockneten flüssigen Beschichtung (2a) wird in einer Auftragseinheit unter inerten Bedingungen durch Einbringung von Stickstoff einer Strahlungseinheit zugeführt, welche durch eine UV-Strahlungseinheit mit einer wesentlichen Wellenlänge von 172 nm die Oberfläche der flüssigen Beschichtung (2a) härtet und dabei eine Mikrofaltung erzielt. Optional erfolgt nach dieser UV-Bestrahlung ein weiterer Bestrahlungsschritt zur weiteren Aushärtung der Beschichtungsmasse (2a) oder (2b). In einer bevorzugten Ausführungsform erfolgt ein derartiger weiterer Bestrahlungsschritt nach dieser UV-Bestrahlung.

In einer alternativen Ausführungsform kann die Wellenlänge auch in einem Bereich zwischen 150 nm und 230 nm variiert werden.

Anschließend wird die so erzeugte Folie mit der ersten getrockneten flüssigen Beschichtung (2) und der in der Oberfläche polymerisierten zweiten flüssigen Beschichtung (2a) in einer Schnittstation 6 auf passende Längen von 2.800 mm geschnitten.

In einer alternativen Ausführungsform kann auch auf die Schnittstation verzichtet werden, und die Dekorfolie wird auf einer Aufwickeleinheit auf eine Rolle aufgewickelt.

Daran anschließend wird zur Erzielung des erfindungsgemäßen Endproduktes ein Stapel mit folgendem Aufbau gebildet:

Auf eine Trägerplatte 3, in diesem Falle eine 12 mm dicke HDF-Platte (hochdichte Faserplatte), wird eine Lage des oben erzeugten Dekorfilms mit der ersten und zweiten flüssigen Beschichtung (2) und (2a), erzeugt nach der o.g. Behandlung, aufgelegt. Auf die Rückseite der Trägerplatte 3 wird ein mit einem Melaminharz imprägniertes Papier mit einem Trockengrammaturgewicht von 70 g/m², nach Imprägnierung Gesamtgewicht von 140 g/m², aufgelegt. Dieses so gebildete Paket wird dann einer Heißpresse zugeführt und mit einer Temperatur von 170 °C und einem Druck von 40 bar innerhalb einer Presszeit von 45 Sekunden ausgehärtet. Dabei bleibt die durch die UV-Strahlung in der oben beschriebenen Bestrahlungseinheit 7.2 erzeugte Mikrofaltung im Wesentlichen unbeschädigt, so dass das Ergebnis das erfindungsgemäße Produkt mit einer haptisch sehr positiv anmutenden matten Oberfläche mit weniger als 3 Glanzpunkten ist.

### Ausführungsbeispiel 8: Antifinger-Print mit Excimer auf Melamin-Imprägnat (erfindungsgemäßes Verfahren)

Ein Dekorpapier mit einem Rohgewicht von 80 g/m² wird zunächst mit einer Fantasiedekor im Tiefdruckverfahren bedruckt. Dieses so bedruckte Papier wird anschließend in einem Imprägnierkanal mit einer Melaminharzmischung, enthaltend Melamin und Anteile von Acrylat-funktionellen Bindemitteln, sowie weiterer Gemischbestandteile, imprägniert und vorgetrocknet, unter ähnlichen Bedingungen wie in den oben geschilderten Ausführungsformen, mit den Trocknungseinheiten (1.2). In diesem Fall stellt die Melaminharzmischung die erste flüssige Beschichtung (2) dar.

Anschließend wird der so vorbeschichtete Papierfilm einer Auftragsstation 7.1 zugeführt, bei der eine zweite flüssige polymerisierbare Beschichtungsschicht von 45 g/m² in einem Walzenauftragsverfahren auf den so vorbehandelten Papierfilm aufgetragen wird. Diese zweite flüssige polymerisierbare Beschichtung (2a) besteht aus einem Urethan-Acrylatgemisch mit jeweils freien Acrylatgruppen mit einem Anteil von weniger als 2.0 Gewichtsprozent Photoinitiatoren vorzugsweise höchstens 3.0 Gewichtsprozent, insbesondere zwischen 0.25 bis 1.0 Gewichtsprozent eines Gemisches aus Photoinitiatoren zur UV-Härtung der Gruppe von Bisacylphosphinoxide (Typ 1) und alpha-Hydroxyalkylphenone (Typ 1) wie vorzugsweise dem 2-Hydroxy-2-methyl-1-phenylpropanon und/oder Methylbenzoylformiat. Zudem finden niedrig-viskose di- oder multifunktionelle Reaktivverdünner Einsatz, vorzugsweise Hexandioldiacrylat (HDDA), Trimethylolpropantriacrylat (TMPTA) und/oder Dipropylenglycoldiacrylat (DPGDA).

Je nach Anwendungsfenster bestimmen optional zugesetzte Additive das Eigenschaftsprofil der zweiten Beschichtungsmasse. Das Additivgemisch kann Tenside, Katalysatoren, Initiatoren für thermische Vernetzung, Lichtschutzmittel, Füllstoffe zur Verbesserung der Mikrokratzfestigkeit, Zusatzstoffe zur Anpassung der hydro- und oleophoben Eigenschaften enthalten.

In einer alternativen Ausführungsform kann die aufgetragene Schichtstärke auch zwischen 10 g/m² und 50 g/m² variiert werden.

Die so beschichtete Papierbahn mit der angetrockneten ersten flüssigen Beschichtung (2) und der noch nicht getrockneten flüssigen Beschichtung (2a) wird in einer Auftragseinheit unter inerten Bedingungen durch Einbringung von Stickstoff einer Strahlungseinheit zugeführt, welche durch eine UV-Strahlungseinheit mit einer wesentlichen Wellenlänge von 172 nm die Oberfläche der flüssigen Beschichtung (2a) härtet und dabei eine Mikrofaltung erzielt. Optional erfolgt nach dieser UV-Bestrahlung ein weiterer Bestrahlungsschritt zur weiteren Aushärtung der Beschichtungsmasse (2a) oder (2b). In einer bevorzugten Ausführungsform erfolgt ein derartiger weiterer Bestrahlungsschritt nach dieser UV-Bestrahlung.

In einer alternativen Ausführungsform kann die Wellenlänge auch in einem Bereich zwischen 150 nm und 230 nm variiert werden.

Anschließend wird die so erzeugte Folie mit der ersten getrockneten flüssigen Beschichtung (2) und der in der Oberfläche polymerisierten zweiten flüssigen Beschichtung (2a) in einer Schnittstation 6 auf passende Längen von 2.800 mm geschnitten.

In einer alternativen Ausführungsform kann auch auf die Schnittstation verzichtet werden, und die Dekorfolie wird auf einer Aufwickeleinheit auf eine Rolle aufgewickelt.

Daran anschließend wird zur Erzielung des erfindungsgemäßen Endproduktes ein Stapel mit folgendem Aufbau gebildet:
Auf eine Trägerplatte 3, in diesem Falle eine 12 mm dicke HDF-Platte (hochdichte Faserplatte), wird eine Lage des oben erzeugten Dekorfilms mit der ersten und zweiten flüssigen Beschichtung (2) und (2a), erzeugt nach der o.g. Behandlung, aufgelegt. Auf die Rückseite der Trägerplatte 3 wird ein mit einem Melaminharz imprägniertes Papier mit einem Trockengrammaturgewicht von 70 g/m², nach Imprägnierung Gesamtgewicht von 140 g/m², aufgelegt. Dieses so gebildete Paket wird dann einer Heißpresse zugeführt und mit einer Temperatur von 170 °C und einem Druck von 40 bar innerhalb einer Presszeit von 45 Sekunden ausgehärtet. Dabei bleibt die durch die UV-Strahlung in der oben beschriebenen Bestrahlungseinheit 7.2 erzeugte Mikrofaltung im Wesentlichen unbeschädigt, so dass das Ergebnis das erfindungsgemäße Produkt mit einer haptisch sehr positiv anmutenden matten Oberfläche mit weniger als 3 Glanzpunkten ist.

### Bezugszeichen für Figuren 1 und 2:

1 Trägerbahn
2 Beschichtungsmasse
3 Kernlage
4 Papierlage

### Bezugszeichen für Figur 3:

1.1 Teil der Auftragseinheit für die erste flüssige Beschichtungsmasse (2)
1.2 Trocknungseinheit für die erste flüssige Beschichtungsmasse (2)
1.3 Transporteinheit im Trockner für die Papierbahn mit der ersten flüssigen Beschichtung (2)
1.4 Abwicklung für bedrucktes Papier und Auftragseinheit (Rakel/Dosiereinrichtung)
2 Erste flüssige Beschichtungsmasse
2a oder 2b Zweite flüssige Beschichtungsmasse (2a oder 2b)
2.1 Papierlage nach dem Stand der Technik
2.2 Lackvorlage
5. Abstapelstation
6. Schnittstation
7. Oberfläche mit Mikrofaltung und matter Struktur
7.1 Auftragseinheit für die zweite, flüssige polymerisierbare Beschichtungsmasse (2a oder 2b)
7.2 Bestrahlungseinheit für UV-Bestrahlung für die zweite, flüssige polymerisierbare Beschichtungsmasse (2a oder 2b)

### Bezugszeichen für Figur 4:

2a/2b. zweite Beschichtungsmasse nach der Bestrahlung mit Mikrofaltung in der Oberfläche und matter Struktur
3. Kernlage z.B. MDF-, HDF-, Span-, Kunststoffplatte o.ä.
8. mögliches Gegenzugmaterial, bereits Stand der Technik (z.B. Melaminbeharztes Papier, Kunststofffolie o.ä.)
10. Heißpresse zur Erzeugung von Druck und Temperatur

### Bezugszeichen für Figur 5:

2 Erste flüssige Beschichtungsmasse
2a/2b. zweite Beschichtungmasse nach der Bestrahlung mit Mikrofaltung in der Oberfläche und matter Struktur
3. Kernlage z.B. MDF-, HDF-, Span-, Kunststoffplatte o.ä.
8. mögliches Gegenzugmaterial, bereits Stand der Technik (z.B. Melaminbeharztes Papier, Kunststofffolie o.ä.)
11. Melaminharzgemisch-imprägniertes Papier mit oder ohne Dekordruck, alternativ unifarben

## Patentansprüche

1. Verfahren zum Herstellen eines plattenförmigen Werkstückes mit den Schritten
(A) Beschichtung einer Trägerbahn (1) mit einer ersten flüssigen, thermisch vernetzbaren Beschichtungsmasse (2),
(B) Trocknung der beschichteten Trägerbahn (1, 2) bei Bedingungen, unter denen die erste flüssige Beschichtungsmasse (2) teilweise vernetzt wird;
(C) weitere Beschichtung der Trägerbahn (1, 2) aus Schritt (B) mit:
(C1) einer zweiten flüssigen polymerisierbaren Beschichtungsmasse (2a), die ein unter Einfluss von elektromagnetischer Strahlung vernetzbares Einkomponenten-Lacksystem ist, oder
(C2) einer zweiten flüssigen polymerisierbaren Beschichtungsmasse (2b), die ein unter Einfluss von elektromagnetischer Strahlung vernetzbares Zweikomponenten-Lacksystem ist;
um so einen beschichteten Film zu erhalten;
(D) Bestrahlung des beschichteten Films aus Schritt (C) mit UV-Strahlung von weniger als 300 nm Wellenlänge derart, dass sich auf der von der Beschichtungsmasse (2) abgewandten Oberfläche der zweiten flüssigen polymerisierbaren Beschichtungsmasse (2a) oder (2b) eine vernetzte Mikrostruktur mit einer Strukturtiefe von weniger als 10 µm ausbildet, und optional
vor und/oder nach der UV-Bestrahlung ein weiterer Bestrahlungsschritt zur weiteren Vernetzung der Beschichtungsmasse (2a) oder (2b) erfolgt;
(E) Herstellung eines mehrschichtigen Aufbaus umfassend:
mindestens eine beschichtete Trägerbahn (1, 2, 2a/2b) und
mindestens eine Kernlage (3); und
(F) Verpressung des mehrschichtigen Aufbaus, um die erste thermisch vernetzbare Beschichtungsmasse (2) und die zweite flüssige polymerisierbare Beschichtungsmasse (2a) oder (2b) vollständig zu vernetzen.

2. Verfahren nach Anspruch 1, wobei in Schritt (D) nach Bestrahlung des beschichteten Films aus Schritt (C) mit UV-Strahlung von weniger als 300 nm Wellenlänge eine weitere Vernetzung von tieferliegenden Schichten mit UV-Strahlung erfolgt, wobei die der Mikrostruktur abgewandte Seite der Beschichtungsmasse (2a) bzw. (2b) nicht vollständig vernetzt wird.

3. Verfahren nach einem der vorangegangenen Ansprüche, wobei die Verpressung in Schritt (F) bei einer Temperatur von größer als 110 °C und bis zu 240°C, und einem Druck von mehr als 5 bar, insbesondere mehr als 20 bar, durchgeführt wird.

4. Verfahren nach einem der vorangegangenen Ansprüche, wobei das mittels elektromagnetischer Strahlung vernetzbare Lacksystem ein Acryllacksystem ist, bevorzugt ein Acryllacksystem, ausgewählt aus der Gruppe bestehend aus Mono-, di- und polyfunktionellen Monomeren, insbesondere Phenoxyethylacrylat, Hexandioldiacrylat, Dipropylenglykoldiacrylat, Trimethylolpropantriacrylat und Trimethylolpropantrimethacrylat.

5. Verfahren nach einem der vorangegangenen Ansprüche, wobei der mehrschichtige Aufbau zwischen der mindestens einen beschichteten Trägerbahn (1, 2, 2a/2b) und der mindestens einen Kernlage (3) mindestens eine Lage eines gegebenenfalls mit einem duroplastischen Harz imprägnierten Papiers (4) umfasst.

6. Verfahren nach einem der vorangegangenen Ansprüche, wobei der mehrschichtige Aufbau höchstens 5 min in Schritt (F) verpresst wird, um die erste Beschichtungsmasse (2) und die zweite flüssige polymerisierbare Beschichtungsmasse (2a/2b) vollständig zu vernetzen.

7. Verfahren nach dem vorangegangenen Anspruch, wobei die erste Beschichtungsmasse (2) einen Initiator enthält, der eine Zerfallstemperatur aufweist, so dass während der Verpressung die vollständige Vernetzung der ersten Beschichtungsmasse (2) innerhalb von höchstens 5 min erfolgt und/oder während der Verpressung eine vollständige Vernetzung der Beschichtung erfolgt; bevorzugt ist der Initiator ausgewählt aus der Gruppe bestehend aus organischen Peroxiden und/oder Azoinitiatoren.

8. Verfahren nach einem der vorangegangenen Ansprüche, wobei in Schritt (A) die erste flüssige Beschichtungsmasse (2) aus der Gruppe der Aminoharze oder aus Gemischen von solchen Harzen, insbesondere von Melaminharzen, Phenolharzen, oder von Gemischen enthaltend diese Harze sowie Anteile von acrylatfunktionellen Bindemitteln, ausgewählt wird, und die Beschichtung der Trägerbahn auch zu einer vollständigen oder teilweisen Penetration der Trägerbahn mit der ersten Beschichtungsmasse (2) führen kann.

9. Verfahren nach einem der vorangegangenen Ansprüche, wobei sich die erste Beschichtungsmasse (2) aus nachfolgenden Komponenten zusammensetzt:
- 0.01 - 5 Gewichtsteile Initiator;
- 30 - 90 Gewichtsteile Harzkomponente;
- 5 - 40 Gewichtsteile Härterkomponente;
- optional 5 - 40 Gewichtsteile Lösemittel oder Reaktivverdünner; und
- optional 1 - 10 Gewichtsteile zusätzlicher Additive.

10. Verfahren nach einem der vorangegangenen Ansprüche, wobei sich die zweite polymerisierbare Beschichtungsmasse (2a) aus nachfolgenden Komponenten zusammensetzt:
- 30 - 90 Gewichtsteile Urethanacrylatharz;
- 5 - 40 Gewichtsteile mono- oder difunktionelle Acrylate;
- optional 5 - 40 Gewichtsteile trifunktionelle Acrylate;
- optional 1 - 10 Gewichtsteile zusätzlicher Additive; und
- 0.01 - 8 Gewichtsteile Initiator für UV- und thermische Härtung; und/oder
wobei die flüssige polymerisierbare Beschichtungsmasse (2b) ein Zweikomponentensystem auf der Basis eines Polyurethanacrylat-Harzsystems ist, bevorzugt wobei sich die polymerisierbare Beschichtungsmasse (2b) aus nachfolgenden Komponenten zusammensetzt:
- 30 - 90 Gewichtsteile Harzkomponente;
- 5 - 40 Gewichtsteile Härterkomponente;
- optional 5 - 40 Gewichtsteile Lösemittel oder Reaktivverdünner, bevorzugt Reaktivverdünner; und
- optional 1 - 10 Gewichtsteile zusätzliche Additive.

11. Verfahren nach einem der vorangegangenen Ansprüche, wobei das plattenförmige Werkstück eine Kratzfestigkeit von mindestens 4N in Verbindungen mit einer Mikrokratzfestigkeit von mindestens Grad 4 gemäß DIN EN 438 aufweist, und/oder wobei das plattenförmige Werkstück einen Glanzgrad zwischen 1,0 bis 3,5, bevorzugt zwischen 1,3 bis 2,8, mehr bevorzugt zwischen 1,5 bis 2,5 Glanzeinheiten (GE) aufweist, gemessen bei einem Reflexionswinkel von 60 Grad; und einen Glanzgrad zwischen 5 und 26, bevorzugt zwischen 7 und 25, mehr bevorzugt zwischen 9 und 23.5 GE, gemessen bei einem Reflexionswinkel von 85 Grad; wobei der Glanzgrad nach dem Standard ASTM D 523 bei einem Reflexionswinkel von 60 Grad und 85 Grad jeweils in und quer zur Laufrichtung mit einem Dreier-Mittelwert mit dem Prüfgerät micro-TRI-gloss Dreiwinkel-Glanzmesser der Firma BYK-Gardner GmbH gemessen wird.

## Claims

1. Method for manufacturing a plate-shaped workpiece, comprising the steps of
(A) coating a carrier sheet (1) with a first liquid, thermally crosslinkable coating composition (2),
(B) drying the coated carrier sheet (1, 2) under conditions under which the first liquid coating composition (2) is partially crosslinked;
(C) further coating of the carrier sheet (1, 2) from step (B) with:
(C1) a second liquid polymerizable coating composition (2a) which is a single-component lacquer system crosslinkable under the influence of electromagnetic radiation, or
(C2) a second liquid polymerizable coating composition (2b) which is a two-component lacquer system crosslinkable under the influence of electromagnetic radiation;
in order to thus obtain a coated film;
(D) irradiating the coated film from step (C) with UV radiation having a wavelength of less than 300 nm in such a way that a crosslinked microstructure having a structure depth of less than 10 µm forms on that surface of the second liquid polymerizable coating composition (2a) or (2b) which faces away from the coating composition (2), and optionally
before and/or after the UV irradiation, a further irradiation step for further crosslinking of the coating composition (2a) or (2b) takes place;
(E) manufacturing a multilayer structure comprising:
at least one coated carrier sheet (1, 2, 2a/2b) and
at least one core layer (3); and
(F) pressing the multilayer structure in order to fully crosslink the first thermally crosslinkable coating composition (2) and the second liquid polymerizable coating composition (2a) or (2b).

2. Method according to Claim 1, wherein, in step (D), after irradiation of the coated film from step (C) with UV radiation having a wavelength of less than 300 nm, further crosslinking of deeper layers with UV radiation takes place, wherein that side of the coating composition (2a) or (2b) which faces away from the microstructure is not fully crosslinked.

3. Method according to any one of the preceding claims, wherein the pressing in step (F) is carried out at a temperature of greater than 110°C and up to 240°C, and at a pressure of more than 5 bar, in particular more than 20 bar.

4. Method according to any one of the preceding claims, wherein the lacquer system crosslinkable by means of electromagnetic radiation is an acrylic lacquer system, preferably an acrylic lacquer system selected from the group consisting of mono-, di- and polyfunctional monomers, in particular phenoxyethyl acrylate, hexanediol diacrylate, dipropylene glycol diacrylate, trimethylolpropane triacrylate and trimethylolpropane trimethacrylate.

5. Method according to any one of the preceding claims, wherein the multilayer structure between the at least one coated carrier sheet (1, 2, 2a/2b) and the at least one core layer (3) comprises at least one layer of a paper (4) optionally impregnated with a thermosetting resin.

6. Method according to any one of the preceding claims, wherein the multilayer structure is pressed at most 5 min in step (F) in order to fully crosslink the first coating composition (2) and the second liquid polymerizable coating composition (2a/2b).

7. Method according to the preceding claim, wherein the first coating composition (2) contains an initiator which has a decomposition temperature such that, during the pressing, the complete crosslinking of the first coating composition (2) takes place within at most 5 min and/or, during the pressing, complete crosslinking of the coating takes place; preferably, the initiator is selected from the group consisting of organic peroxides and/or azo initiators.

8. Method according to any one of the preceding claims, wherein, in step (A), the first liquid coating composition (2) is selected from the group of amino resins or from mixtures of such resins, in particular from melamine resins, phenolic resins, or from mixtures containing these resins and also parts of acrylate-functional binders, and the coating of the carrier sheet can also lead to complete or partial penetration of the carrier sheet with the first coating composition (2).

9. Method according to any one of the preceding claims, wherein the first coating composition (2) is composed of the following components:
- 0.01 - 5 parts by weight of initiator;
- 30 - 90 parts by weight of resin component;
- 5 - 40 parts by weight of hardener component;
- optionally 5 - 40 parts by weight of solvent or reactive diluent; and
- optionally 1 - 10 parts by weight of additional additives.

10. Method according to any one of the preceding claims, wherein the second polymerizable coating composition (2a) is composed of the following components:
- 30 - 90 parts by weight of urethane acrylate resin;
- 5 - 40 parts by weight of mono- or difunctional acrylates;
- optionally 5 - 40 parts by weight of trifunctional acrylates;
- optionally 1 - 10 parts by weight of additional additives; and
- 0.01 - 8 parts by weight of initiator for UV and thermal curing;
and/or
wherein the liquid polymerizable coating composition (2b) is a two-component system based on a polyurethane acrylate resin system, preferably wherein the polymerizable coating composition (2b) is composed of the following components:
- 30 - 90 parts by weight of resin component;
- 5 - 40 parts by weight of hardener component;
- optionally 5 - 40 parts by weight of solvent or reactive diluent, preferably reactive diluent; and
- optionally 1 - 10 parts by weight of additional additives.

11. Method according to any one of the preceding claims, wherein the plate-shaped workpiece has a scratch resistance of at least 4N in combinations with a microscratch resistance of at least degree 4 according to DIN EN 438, and/or wherein the plate-shaped workpiece has a gloss degree of between 1.0 to 3.5, preferably between 1.3 to 2.8, more preferably between 1.5 to 2.5 gloss units (GE), measured at a reflection angle of 60 degrees; and a gloss degree of between 5 and 26, preferably between 7 and 25, more preferably between 9 and 23.5 GE, measured at a reflection angle of 85 degrees; wherein the gloss degree is measured according to the standard ASTM D 523 at a reflection angle of 60 degrees and 85 degrees in each case in and transversely to the running direction with a three-mean value using the micro-TRI-gloss three-angle glossmeter from BYK-Gardner GmbH.

## Revendications

1. Procédé de fabrication d'une pièce en forme de plaque, comprenant les étapes suivantes :
(A) revêtement d'une bande support (1) avec une première masse de revêtement (2) liquide et réticulable thermiquement,
(B) séchage de la bande support (1, 2) revêtue dans des conditions dans lesquelles la première masse de revêtement (2) liquide est partiellement réticulée ;
(C) revêtement additionnel de la bande support (1, 2) de l'étape (B) avec :
(C1) une deuxième masse de revêtement (2a) liquide polymérisable qui est un système de peinture à un composant réticulable sous l'influence d'un rayonnement électromagnétique, ou
(C2) une deuxième masse de revêtement (2b) liquide polymérisable qui est un système de peinture à deux composants réticulable sous l'influence d'un rayonnement électromagnétique ;
pour obtenir ainsi un film revêtu ;
(D) irradiation du film revêtu de l'étape (C) avec un rayonnement UV d'une longueur d'onde inférieure à 300 nm de telle sorte qu'une microstructure réticulée ayant une profondeur de structure inférieure à 10 µm se configure sur la surface de la deuxième masse de revêtement (2a) ou (2b) liquide polymérisable opposée à la masse de revêtement (2), et éventuellement avant et/ou après l'irradiation UV, une étape d'irradiation supplémentaire pour la réticulation supplémentaire de la masse de revêtement (2a) ou (2b) est effectuée ;
(E) fabrication d'une structure multicouche comprenant :
au moins une bande support (1, 2, 2a/2b) revêtue et
au moins une couche centrale (3) ; et
(F) compression de la structure multicouche pour réticuler complètement la première masse de revêtement (2) réticulable thermiquement et la deuxième masse de revêtement (2a) ou (2b) polymérisable liquide.

2. Procédé selon la revendication 1, où dans l'étape (D), après irradiation du film revêtu de l'étape (C) avec un rayonnement UV d'une longueur d'onde inférieure à 300 nm, une réticulation supplémentaire de couches plus profondes avec un rayonnement UV est effectuée, où le côté de la masse de revêtement (2a) ou (2b) opposé à la microstructure n'est pas complètement réticulé.

3. Procédé selon l'une quelconque des revendications précédentes, où la compression dans l'étape (F) est effectuée à une température supérieure à 110 °C et allant jusqu'à 240 °C, et à une pression supérieure à 5 bar, en particulier supérieure à 20 bar.

4. Procédé selon l'une quelconque des revendications précédentes, où le système de peinture réticulable au moyen d'un rayonnement électromagnétique est un système de peinture acrylique, de préférence un système de peinture acrylique qui est choisi dans le groupe constitué par les monomères mono-, di- et polyfonctionnels, en particulier l'acrylate de phénoxyéthyle, le diacrylate d'hexanediol, le diacrylate de dipropylèneglycol, le triacrylate de triméthylolpropane et le triméthacrylate de triméthylolpropane.

5. Procédé selon l'une quelconque des revendications précédentes, où la structure multicouche comprend, entre l'au moins une bande support (1, 2, 2a/2b) revêtue et l'au moins une couche centrale (3), au moins une couche d'un papier (4) éventuellement imprégné d'une résine thermodurcissable.

6. Procédé selon l'une quelconque des revendications précédentes, où la structure multicouche est comprimée au maximum 5 min dans l'étape (F) pour réticuler complètement la première masse de revêtement (2) et la deuxième masse de revêtement (2a/2b) polymérisable liquide.

7. Procédé selon la revendication précédente, où la première masse de revêtement (2) contient un initiateur qui présente une température de désintégration telle que pendant la compression, la réticulation complète de la première masse de revêtement (2) est effectuée en un maximum de 5 min et/ou pendant la compression, une réticulation complète du revêtement est effectuée ; de préférence, l'initiateur est choisi dans le groupe constitué par les peroxydes organiques et/ou les initiateurs azo.

8. Procédé selon l'une quelconque des revendications précédentes, où dans l'étape (A), la première masse de revêtement (2) liquide est choisie dans le groupe des résines aminées ou des mélanges de telles résines, en particulier des résines de mélamine, des résines phénoliques, ou des mélanges contenant ces résines ainsi que des proportions de liants à fonction acrylate, et le revêtement de la bande support peut également conduire à une pénétration complète ou partielle de la bande support avec la première masse de revêtement (2).

9. Procédé selon l'une quelconque des revendications précédentes, où la première masse de revêtement (2) se compose des composants suivants :
- 0,01 à 5 parties en poids d'initiateur ;
- 30 à 90 parties en poids de composant résine ;
- 5 à 40 parties en poids de composant durcisseur ;
- éventuellement 5 à 40 parties en poids de solvant ou diluant réactif ; et
- éventuellement 1 à 10 parties en poids d'additifs supplémentaires.

10. Procédé selon l'une quelconque des revendications précédentes, où la deuxième masse de revêtement (2a) polymérisable se compose des composants suivants :
- 30 à 90 parties en poids de résine uréthane-acrylate ;
- 5 à 40 parties en poids d'acrylates mono- ou difonctionnels ;
- éventuellement 5 à 40 parties en poids d'acrylates trifonctionnels ;
- éventuellement 1 à 10 parties en poids d'additifs supplémentaires ; et
- 0,01 à 8 parties en poids d'initiateur pour le durcissement UV et thermique ;
et/ou
où la masse de revêtement (2b) liquide polymérisable est un système à deux composants à base d'un système de résine polyuréthane-acrylate, de préférence où la masse de revêtement (2b) polymérisable se compose des composants suivants :
- 30 à 90 parties en poids de composant résine ;
- 5 à 40 parties en poids de composant durcisseur ;
- éventuellement 5 à 40 parties en poids de solvant ou diluant réactif, de préférence diluant réactif ; et
- éventuellement 1 à 10 parties en poids d'additifs supplémentaires.

11. Procédé selon l'une quelconque des revendications précédentes, où la pièce en forme de plaque présente une résistance aux rayures d'au moins 4 N en combinaisons avec une résistance aux micro-rayures d'au moins degré 4 selon DIN EN 438, et/ou où la pièce en forme de plaque présente un degré de brillance compris entre 1,0 et 3,5, de préférence entre 1,3 et 2,8, de manière davantage préférée entre 1,5 et 2,5 unités de brillance (GE), mesuré à un angle de réflexion de 60 degrés ; et un degré de brillance compris entre 5 et 26, de préférence entre 7 et 25, de manière davantage préférée entre 9 et 23,5 GE, mesuré à un angle de réflexion de 85 degrés ; où le degré de brillance est mesuré selon la norme ASTM D 523 à un angle de réflexion de 60 degrés et 85 degrés, respectivement dans et transversalement à la direction de défilement avec une valeur moyenne de trois avec l'appareil de mesure de brillance à trois angles de micro-TRI-gloss de la société BYK-Gardner GmbH.
